(19) Europäisches Patentamt

European Patent Office

Office européen des brevets

(11) **EP 1 055 203 B1**

(12) **FASCICULE DE BREVET EUROPEEN**

(45) Date de publication et mention
de la délivrance du brevet:
**11.08.2004 Bulletin 2004/33**

(21) Numéro de dépôt: **99902598.4**

(22) Date de dépôt: **05.02.1999**

(51) Int Cl.⁷: **G07C 9/00**, G07F 7/10

(86) Numéro de dépôt international:
**PCT/FR1999/000249**

(87) Numéro de publication internationale:
**WO 1999/040546 (12.08.1999 Gazette 1999/32)**

(54) **PROTOCOLE DE CONTROLE D'ACCES ENTRE UNE CLE ET UNE SERRURE ELECTRONIQUE**

ZUGANGSKONTROLLPROTOKOLL ZWISCHEN EINEM SCHLÜSSEL UND EINEM
ELEKTRONISCHEN SCHLOSS

PROTOCOL BETWEEN AN ELECTRONIC KEY AND A LOCK

(84) Etats contractants désignés:
**AT BE CH DE ES FR GB IT LI NL SE**

(30) Priorité: **09.02.1998 FR 9801481**

(43) Date de publication de la demande:
**29.11.2000 Bulletin 2000/48**

(73) Titulaire: **LA POSTE**
**92777 Boulogne Billancourt Cédex (FR)**

(72) Inventeurs:
• **CLERC, Fabrice**
**F-14000 Caen (FR)**

• **GIRAULT, Marc**
**F-14000 Caen (FR)**

(74) Mandataire: **Fréchède, Michel**
**Cabinet Plasseraud**
**84, rue d'Amsterdam**
**75440 Paris Cédex 09 (FR)**

(56) Documents cités:
EP-A- 0 427 465        DE-A- 19 527 715
FR-A- 2 722 596        GB-A- 2 154 344
US-A- 4 870 400        US-A- 5 130 519
US-A- 5 243 175        US-A- 5 546 463

**EP 1 055 203 B1**

## Description

La présente invention concerne un protocole de contrôle d'accès entre une clé électronique et une serrure électronique, opérant ce contrôle d'accès, par un contrôle d'accès logique.

Le contrôle d'accès logique à des bâtiments, à des locaux abritant des systèmes de traitement de l'information ou de conservation de valeurs, valeurs fiduciaires, technologiques ou informationnelles, présente, à l'heure actuelle, un intérêt majeur croissant.

De tels processus de contrôle d'accès mettent en oeuvre habituellement un élément d'accès portable, jouant le rôle d'une clé, désigné par ressource accédante, et une ressource accédée, jouant le rôle d'une serrure.

Le contrôle d'accès logique mis en oeuvre entre la ressource accédée, constituant une serrure électronique, et la ressource accédante, jouant le rôle d'une clé électronique, consiste à l'heure actuelle en une succession d'opérations de vérification d'informations ou messages échangés entre la clé et la serrure électronique.

L'un des principaux avantages d'un contrôle d'accès logique, vis-à-vis de contrôles d'accès physiques classiques du type clé serrure, réside notamment dans la possibilité, pour le contrôle d'accès logique, de ne permettre l'accès à une ressource accédée que dans l'intervalle de temps d'une plage horaire courte prédéterminée.

Lorsque, toutefois, le système ressource accédante/ressource accédée concerne une ou plusieurs ressources accédantes permettant l'accès à une pluralité de ressources accédées par la mise en oeuvre d'un contrôle d'accès logique semblable, des opérations frauduleuses de reproduction pendant la plage horaire de validité, soit d'une clé électronique, constituant la ressource accédante, soit du dialogue de contrôle d'accès entre l'une des clés électroniques et l'une des ressources accédées, constituant une serrure électronique, sont alors susceptibles de permettre à tout fraudeur un accès illégitime à toutes les ressources accédées. La simple reproduction du dialogue de contrôle d'accès logique entre ressource accédante et l'une des ressources accédées permet par une attaque, dite attaque par rejeu, un tel accès illégitime.

Une solution classique mise en oeuvre dans le but de répondre à un tel type d'attaque par utilisation illégitime consiste à mettre en oeuvre un contrôle d'accès logique, basé sur ces mécanismes cryptographiques, permettant de limiter la période de validité des droits d'accès à une durée courte, afin de faire échec à toute utilisation illégitime en dehors de la plage de validité en cas de perte, de vol ou de détention illicite de la clé électronique. Une telle solution, décrite dans la demande de brevet français n° 2 722 596 (94 08770) publiée le 9 janvier 1996 au nom de FRANCE TELECOM et LA POSTE, consiste à établir une signature numérique de la plage horaire pendant laquelle l'accès est autorisé. L'accès à la ressource accédée est conditionnel à une vérification, au sein de cette ressource accédée, de la signature numérique précitée.

Une autre solution classique mise en oeuvre dans le même but, en vue de répondre plus particulièrement à une attaque par rejeu, consiste à introduire un caractère de variabilité ou de diversité du dialogue de contrôle d'accès entre la clé et la serrure électronique, au moyen d'une variable aléatoire. Une telle solution apparaît limitée en raison du fait que, d'une part, sauf à faire appel à une ou plusieurs variables physiques externes à caractère purement aléatoire, le caractère aléatoire des variables aléatoires obtenues au moyen des générateurs aléatoires ou pseudo-aléatoires usuels n'est pas totalement satisfait, alors que, d'autre part, le caractère non répétitif de la production d'un tel aléa n'est pas certain, ce qui peut ne pas décourager les fraudeurs de haute volée déterminés et disposant de ressources de calcul importantes.

En tout état de cause, les solutions précitées ne permettent donc d'inhiber avec certitude, ni une attaque par utilisation illégitime d'une clé électronique, ni une attaque par rejeu, pendant la plage horaire de validité, d'une ressource accédée.

D'autres solutions ont été proposées. La demande EP-A-727 894 décrit un système basé sur la cryptographie à clé secrète. Ces systèmes posent un problème de gestion des clés, les certificats de clé ne pouvant être facilement utilisés. La demande de brevet EP-A-807 911 décrit un système basé sur la cryptographie à clé secrète et à clé publique, utilisant des techniques de chiffrement. Un certificat de clé publique est envoyé chiffré au moyen d'une clé secrète. La clé secrète utilisée est elle-même envoyée chiffrée avec la clé publique du destinataire.

La présente invention a pour objet de remédier aux inconvénients précités des solutions préconisées par l'art antérieur.

Un tel objet est notamment atteint par l'intégration au dialogue d'accès logique, entre une ressource accédante et au moins une ressource accédée, d'un processus d'authentification de la ressource accédante par la ressource accédée, l'autorisation ou le refus de l'accès étant rendu conditionnel au succès du processus d'authentification.

Un autre objet de la présente invention est en conséquence la mise en oeuvre d'un protocole de contrôle d'accès entre une ressource accédante, constituée par une clé électronique, et une ressource accédée, constituée par une serrure électronique, dans lequel le processus d'authentification est établi selon un protocole de défi réponse, dans lequel, en outre, de manière particulièrement remarquable, le risque de compromission de la clé électronique est sensiblement réduit à celui engendré par la présence, dans cette clé électronique, d'un simple droit d'accès.

Un autre objet de la présente invention est enfin l'inhibition de tout risque d'attaque d'une serrure électronique par rejeu dans une plage horaire de validité donnée, du fait de l'existence même du processus d'authentification.

L'invention est définie par l'objet des revendications 1, 10 et 11.

Le protocole de contrôle d'accès entre une clé électronique et une serrure électronique, opérant ce contrôle d'accès, objet de la présente invention, est remarquable par le fait que, suite à la mise en présence de la clé électronique et de la serrure électronique, ce protocole consiste en une transmission, de la serrure électronique à la clé électronique, d'un message variable aléatoire d'incitation à authentification de la clé électronique. Sur réception du message variable aléatoire d'incitation à authentification, un calcul et une transmission d'une valeur de signature du message variable aléatoire d'incitation à authentification et de données spécifiques d'authentification sont effectués par la clé électronique vers la serrure électronique, la valeur de signature transmise étant calculée à partir d'une clé privée de signature et des données d'authentification. Suite à la réception, par la serrure électronique, de la valeur de signature et des données spécifiques d'authentification, la serrure électronique effectue une vérification de l'authenticité de la valeur de signature, en fonction des données spécifiques d'authentification. Sur réponse positive ou négative à cette vérification l'accès est accepté, respectivement refusé.

Le protocole de contrôle d'accès entre une clé électronique et une serrure électronique, objet de la présente invention, trouve application à tout type de ressource accédante et de ressource accédée.

Du fait de l'inhibition du risque d'attaque par rejeu, le calcul de la valeur de signature du message variable aléatoire d'incitation à authentification rendant improbable la détermination de cette signature, en dehors de la possession physique de la clé électronique génératrice de cette dernière, le protocole, objet de la présente invention, apparaît particulièrement bien adapté à la gestion sécurisée d'une pluralité de ressources accédées, telles que des boîtes à lettres, voire des coffres de sécurité, au moyen d'une ou plusieurs ressources accédantes, ou clés électroniques, permettant l'accès licite à chacune des ressources accédées, le nombre des clés électroniques étant très inférieur au nombre de boîtes à lettres ou coffres de sécurité.

Il sera mieux compris à la lecture de la description et à l'observation des dessins dans lesquels :

- la figure 1a représente un schéma synoptique général illustratif du protocole de contrôle d'accès entre une clé et une serrure électroniques, objet de la présente invention ;
- la figure 1b représente un organigramme séquentiel illustratif de la succession des étapes permettant la mise en oeuvre du protocole de contrôle d'accès entre une clé et une serrure électroniques, conforme à l'objet de la présente invention ;
- la figure 1c représente un mode de réalisation préférentiel d'une procédure de vérification de signature mise en oeuvre par une serrure électronique, ressource accédée, conformément au protocole, objet de la présente invention ;
- la figure 1d représente, de manière illustrative, un mode opératoire permettant l'obtention d'un message variable aléatoire permettant d'assurer un processus d'authentification, conformément au protocole objet de la présente invention ;
- la figure 1e représente une procédure, conduite par la clé électronique, permettant une vérification auxiliaire de la clé publique autorisant cette clé électronique à effectuer l'opération de signature du message variable aléatoire dans le cadre de la mise en oeuvre du protocole, objet de la présente invention ;
- la figure 1f représente, de manière illustrative, un processus de réduction des attaques d'une serrure électronique en dehors d'au moins une plage horaire de validité, conformément au protocole objet de la présente invention ;
- la figure 1g représente une variante de mise en oeuvre particulièrement avantageuse du processus de vérification auxiliaire représenté en figure 1e, dans lequel, en outre, lorsque la clé électronique est munie d'une horloge interne, une sécurité supplémentaire consistant en une invalidation totale de la clé électronique est prévue lorsqu'une tentative d'accès est réalisée en dehors de la plage horaire validée ;
- la figure 2a représente une première variante avantageuse de mise en oeuvre du protocole, objet de la présente invention, grâce à laquelle la mémorisation d'une deuxième clé publique au niveau de chaque serrure électronique est supprimée, ce qui augmente le niveau de sécurité global de l'ensemble ;
- la figure 2b représente un organigramme séquentiel des étapes du protocole tel que représenté en figure 2a ;
- la figure 3a représente un schéma synoptique de l'architecture électronique d'une clé électronique permettant la mise en oeuvre du protocole de contrôle d'accès, objet de la présente invention ;
- la figure 3b représente un schéma synoptique de l'architecture électronique d'une serrure électronique permettant la mise en oeuvre du protocole de contrôle d'accès, objet de la présente invention.

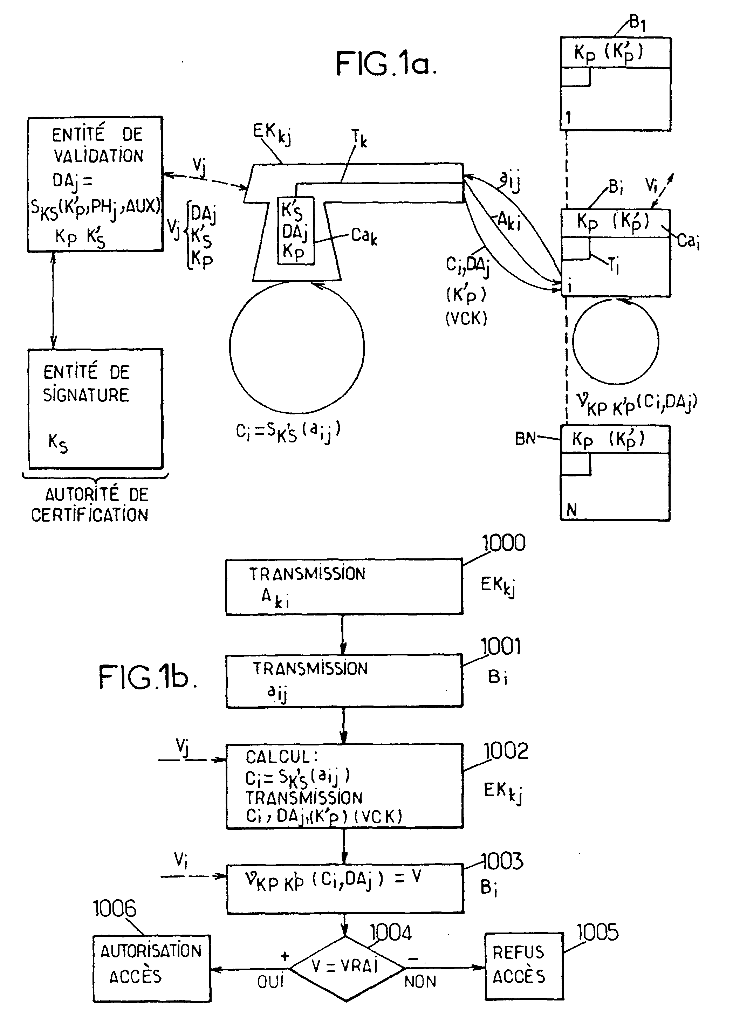

Une description plus détaillée du protocole d'accès entre une clé électronique et une serrure électroniques opérant ce contrôle d'accès, par contrôle d'accès logique, conforme à l'objet de la présente invention, sera maintenant donnée en liaison avec les figures 1a et 1b.

D'une manière générale, on rappelle que le protocole de contrôle d'accès, objet de la présente invention, consiste en un dialogue de contrôle d'accès l'ogique entre la clé électronique et au moins une serrure électronique, à ce contrôle d'accès logique étant intégré un processus d'authentification de la clé électronique par la serrure électronique, en vue d'assurer l'autorisation ou le refus de l'accès précité. Le processus d'authentification met en oeuvre des opérations de calcul de signature de messages et/ou de données, ainsi que de vérification de ces signatures, ces opérations permettant d'assurer la vérification de l'authenticité des messages ou données précités.

De manière non limitative, les opérations de calcul de signature puis de vérification de signature mises en oeuvre dans le protocole, objet de la présente invention, peuvent être effectuées, soit à partir d'un algorithme de signature à clé secrète, soit à partir d'un algorithme à clé publique mettant en oeuvre une clé privée de signature, à laquelle est associée une clé publique de vérification de signature.

La réalisation des opérations de calcul de signatures et de vérification de ces signatures pour la mise en oeuvre du protocole de contrôle d'accès, objet de la présente invention, est décrite dans la présente description dans un mode de réalisation préférentiel non limitatif, au moyen d'un algorithme de chiffrement ou de signature mettant en oeuvre au moins une clé publique et une clé privée, l'algorithme retenu à titre d'exemple étant l'algorithme RSA, algorithme développé par RIVEST, SHAMIR et ADLEMAN. D'autres algorithmes à clé publique peuvent être utilisés sans inconvénient.

Conformément à la désignation habituelle, dans le cadre des processus de calcul de signatures et de vérification de ces signatures, on indique que lorsqu'un algorithme à clé publique est utilisé, toute clé de signature est une clé privée, cette clé devant être tenue secrète, alors que toute clé de vérification de signature est une clé publique, cette clé pouvant être divulguée. Lorsque toutefois un algorithme à clé secrète est utilisé, cette clé secrète pouvant être utilisée comme une clé de chiffrement pour réaliser une opération de signature, une telle clé et la clé de vérification d'une telle signature sont impérativement des clés secrètes.

Par convention, pour toute clé privée utilisée pour calculer une signature, on note :

$S_{KS}(A,B,C)$, le calcul de la signature obtenue par application de la clé privée $K_S$ au moyen de l'algorithme de signature utilisé, c'est-à-dire l'algorithme RSA dans le cadre de la présente description.

De la même manière, on note toute opération de vérification d'une signature donnée, la signature étant entendue comme un message numérique :

$\mathcal{V}_{KP}(X,Y,Z)$, toute opération de vérification de signature effectuée par application de la clé publique $K_P$ associée à la clé privée $K_S$ sur les signatures ou messages signés X,Y,Z précités.

Dans toute opération de calcul de signature, respectivement de vérification de signature, A,B,C, respectivement X,Y,Z désignent les arguments soumis à l'opération de signature, respectivement de vérification de signature, ces arguments étant bien entendu constitués par des messages ou données, ainsi que mentionné précédemment.

Par définition, l'opération de vérification au moyen de la clé publique $K_P$ appliquée à une signature obtenue au moyen d'une clé privée $K_S$ appliquée sur un argument A et prenant A comme paramètre d'entrée permet d'obtenir une réponse Oui/Non à la vérification. Une telle vérification s'écrit :

$$- \mathcal{V}_{KP}(S_{KS}(A),A) = \text{Oui/Non.}$$

Dans le cas de la mise en oeuvre d'algorithmes de signature et de vérification de signature dits à rétablissement de message, tel que l'algorithme RSA, une valeur vérifiée VA de l'argument A est obtenue, bien entendu réputée égale à l'argument A lui-même.

De manière plus spécifique, afin de permettre la mise en oeuvre du protocole de contrôle d'accès objet de la présente invention, on indique que tant la clé électronique que la serrure électronique sont chacune munies de modules de calcul et de mémorisation de données, notés $Ca_k$ et $Ca_i$, afin de permettre la mémorisation de tout message nécessaire au processus d'identification, le calcul des signatures et la vérification de ces signatures afin de permettre la mise en oeuvre du processus d'authentification. Les indices k et i représentent une adresse ou référence physique attribuée à une clé électronique et à une serrure électronique respectivement.

Sur la figure 1a et les figures suivantes, on a désigné par $EK_{kj}$ une clé électronique permettant la mise en oeuvre du protocole de contrôle d'accès, objet de la présente invention, l'indice k correspondant à un numéro d'ordre ou d'identification de la clé électronique elle-même. L'indice j correspond à une adresse ou référence d'opération de validation de la clé électronique $Ek_{kj}$, ainsi qu'il sera décrit de manière plus détaillée ultérieurement dans la description. Chaque clé électronique $EK_{kj}$ est ainsi munie du module de calcul $Ca_k$ et d'un module de transmission de messages, notés $T_k$, représenté par une antenne filaire reliée à l'unité de calcul $Ca_k$, cette antenne filaire étant réputée permettre la transmission de messages par voie électromagnétique par exemple.

Il en est de même pour chaque serrure électronique, un ensemble de serrures électroniques, noté $B_1$, $B_i$ à $B_N$, étant représenté sur la figure 1a, chaque serrure électronique $B_i$ étant munie d'un module de calcul et de mémorisation $Ca_i$ et d'un module de transmission représenté également par une antenne filaire, noté $T_i$, permettant également l'émission-réception de messages ou de données par voie électromagnétique par exemple.

Lors d'une tentative d'accès d'une clé $EK_{kj}$ auprès d'une serrure $B_i$, les antennes filaires respectives $T_k$ et $T_i$ sont mises en vis-à-vis, afin de permettre l'échange de messages permettant d'assurer le contrôle d'accès logique précité.

D'une manière générale, sur la figure 1a et dans l'ensemble des figures accompagnant la présente description, dans tout schéma synoptique général mettant en oeuvre les différents acteurs du protocole de contrôle d'accès, objet de la présente invention, toute transaction, c'est-à-dire échange de messages entre ces acteurs, est représentée par une flèche allant de l'un des acteurs à l'autre ou réciproquement.

Lorsqu'une opération est effectuée en interne, par l'un des acteurs, cette opération est représentée par une flèche fermée indiquant la réalisation d'une telle opération en interne pour l'acteur considéré.

Enfin, lorsqu'une transaction intervient entre deux acteurs, et lorsque cette transaction est réalisée comme un antécédent à la mise en oeuvre du protocole, objet de la présente invention, cette transaction est représentée par une flèche en pointillé.

Le protocole de contrôle d'accès entre une clé électronique et une serrure électronique, objet de la présente invention, est mis en oeuvre sous le contrôle d'une autorité de certification, telle que représentée schématiquement en figure 1a, cette autorité de certification ayant la charge d'assurer la gestion générale de l'ensemble des clés électroniques $EK_{kj}$ et de l'ensemble des serrures électroniques $B_i$ accessible par au moins l'une de ces clés électroniques.

L'autorité de certification telle que représentée en figure 1a peut consister en une entité de signature, laquelle est habilitée à choisir et définir une clé privée, notée $K_S$, dans le cadre de la mise en oeuvre des algorithmes de signature précédemment mentionnés dans la description. La clé privée de signature $K_S$ est choisie ainsi par l'entité de signature, cette clé de signature n'étant ni communiquée, ni divulguée à aucun autre acteur autorisé à mettre en oeuvre le protocole de contrôle d'accès, objet de la présente invention.

L'autorité de certification comprend en outre une entité de validation, laquelle peut être distincte de l'entité de signature, mais hiérarchiquement liée à cette dernière. L'entité de signature communique à l'entité de validation la clé publique $K_P$ associée à la clé privée $K_S$ ainsi qu'un certain nombre de données d'authentification, notées $DA_j$, ces données d'authentification étant constituées en fait par la signature au moyen de la clé privée $K_S$ détenue par l'autorité de certification d'un certain nombre d'arguments, comprenant notamment une deuxième clé publique, notée $K'_P$, une valeur de plage horaire, notée $PH_j$, cette valeur de plage horaire étant associée à la deuxième clé publique $K'_P$ ainsi que par exemple des données auxiliaires, notées AUX, spécifiques. Dans la suite de la description, on désigne indifféremment la plage horaire $PH_j$ par plage de validité.

A la deuxième clé publique $K'_P$ est associée une clé privée $K'_S$, l'initiative du choix de la deuxième clé privée $K'_S$ et de la deuxième clé publique $K'_P$ pouvant être accordée à l'entité de validation.

Afin d'assurer la mise en oeuvre du protocole de contrôle d'accès, objet de la présente invention, chaque clé électronique $EK_{kj}$ est soumise à une opération de validation, notée $V_j$, consistant à charger et/ou télécharger les messages et paramètres de données détenus par l'entité de validation et nécessaires à la mise en oeuvre du protocole de contrôle d'accès, objet de la présente invention, dans les circuits mémoire de chaque clé électronique précitée $EK_{kj}$. Cette opération $V_j$ est représentée en conséquence en pointillé sur la figure 1a, dans la mesure où cette dernière est effectuée bien entendu préalablement à la première utilisation d'une clé électronique déterminée. Lors de cette opération, les données d'authentification $DA_j$ et la deuxième clé privée $K'_S$ sont chargées dans les circuits mémoires de chaque clé électronique $EK_{kj}$ et de préférence munies, au niveau de l'unité de calcul $Ca_k$, de circuits mémoires appropriés comportant au moins une zone de mémoire protégée, dont le niveau de protection correspond sensiblement à celui des zones mémoires protégées d'une carte à microprocesseur par exemple, afin de mémoriser la deuxième clé privée $K'_S$ de manière sécurisée. En ce qui concerne les données d'authentification $DA_j$, celles-ci sont, de manière spécifique, chargées préalablement à une ou plusieurs utilisations de la clé électronique $EK_{kj}$.

Ainsi, à chaque clé électronique $EK_k$, inutilisable avant toute opération dite de validation $V_j$, est en fait substituée une clé électronique opérationnelle $EK_{kj}$, l'indice j désignant la référence aux données d'authentification $DA_j$ associées à la clé électronique précitée, et en particulier à la plage horaire de validité de la deuxième clé privée et de la deuxième clé publique $K'_S$, $K'_P$ associées à cette plage horaire.

En outre, l'opération de validation $V_j$ consiste à charger ou télécharger dans chaque clé $EK_{kj}$ la première clé publique $K_P$ correspondant à la première clé privée $K_S$ détenue par l'autorité de certification. D'une manière spécifique, la première clé publique $K_P$ est chargée une seule fois dans chaque clé électronique $EK_{kj}$ préalablement à une ou plusieurs utilisations successives, en fonction de la politique de gestion des clés définie par l'autorité de certification pour chaque application considérée.

En ce qui concerne chaque serrure électronique $B_i$, on indique qu'une étape de validation de ces serrures électroniques, notée $V_i$ sur la figure 1a, consiste à mémoriser et charger et/ou télécharger dans les circuits de mémorisation de chaque unité de calcul Ca$_i$ la première et la deuxième clé publiques K$_P$, K'$_P$ précédemment mentionnées dans la description.

Suite aux validations V$_j$ et V$_i$ précitées, le protocole de contrôle d'accès, objet de la présente invention, peut alors être conduit entre une clé électronique validée EK$_{kj}$ et toute serrure électronique B$_i$ également validée, ainsi que mentionné précédemment.

Toute tentative d'accès par une personne préposée disposant d'une clé électronique EK$_{kj}$ consiste pour cette dernière à mettre en présence les organes de transmission respectifs T$_k$ et T$_i$ de la clé électronique et de la serrure électronique.

Cette mise en présence ayant été réalisée à titre d'exemple non limitatif entre la clé et la serrure B$_i$ représentées sur la figure 1a, la clé électronique EK$_{kj}$ adresse à la serrure électronique B$_i$ un message de demande d'identification, ce message étant noté A$_{ki}$. Le message de demande d'identification peut consister par exemple en un numéro d'identification spécifique à la clé électronique EK$_{kj}$. La serrure électronique B$_i$ peut alors, suite à une vérification du message de demande d'identification A$_{ki}$, cette vérification pouvant consister en une simple vérification de valeur du message communiqué par rapport à des valeurs de référence, mettre en oeuvre le protocole de contrôle d'accès, conforme à l'objet de la présente invention, tel qu'il sera décrit ci-après.

En référence à la figure précitée, le protocole de contrôle d'accès, objet de la présente invention, consiste au moins, successivement, suite à la réception par la serrure électronique B$_i$ du message de demande d'identification A$_{ki}$ adressé par la clé électronique accédante, en une transmission de la serrure électronique B$_i$ à la clé électronique EK$_{kj}$, d'un message variable aléatoire, noté a$_{ij}$, d'incitation à authentification de cette clé électronique.

Suite à la réception du message variable aléatoire d'incitation à authentification a$_{ij}$ par la clé électronique, cette dernière procède à une étape de calcul d'une valeur de signature C$_i$ du message variable aléatoire d'incitation à authentification. Cette étape est notée, sur la figure 1a :

$$C_i = S_{K'_S}(a_{ij}).$$

Compte tenu de la convention précédemment indiquée, on comprend que la valeur de signature du message variable aléatoire d'incitation à authentification est obtenue à partir de la deuxième clé privée K'$_s$. On comprend en particulier que l'opération de signature C$_i$ du message variable aléatoire d'incitation à authentification a$_{ij}$ établit en fait le droit d'accès de la clé électronique à la serrure électronique, pour la valeur vraie de cette signature. On comprend en outre, selon un aspect particulièrement avantageux du protocole, objet de la présente invention, que ce droit d'accès est modifié, à chaque transaction et à chaque tentative d'accès.

Suite à cette étape de calcul de signature, une étape suivante est réalisée par la clé électronique EK$_{kj}$, cette étape consistant en une transmission vers la serrure électronique B$_i$ de la signature C$_i$ et des données spécifiques d'authentification DA$_j$, ces données étant bien entendu spécifiques à la plage horaire de validité PH$_j$ de la deuxième clé privée K'$_S$ et de la deuxième clé publique K'$_P$ associées à cette plage de validité. L'opération de transmission précitée est notée C$_i$, DA$_j$ sur la figure 1a.

Suite à la réception par la serrure électronique B$_i$ de la valeur de signature C$_i$ et des données spécifiques d'authentification DA$_j$, la serrure électronique B$_i$, ainsi que représentée par une flèche fermée sur la figure 1a, procède à une vérification de l'authenticité de la valeur de signature en fonction des données spécifiques d'authentification. L'opération de vérification précitée, par la serrure électronique B$_i$, est notée $V_{KPK'P}$ ((C$_i$,DA$_j$),K$_p$,K'$_p$) = Oui/Non de la même manière que précédemment.

Compte tenu de la convention adoptée précédemment, on comprend que l'étape de vérification précitée est réalisée par application de la première et de la deuxième clé publiques K$_P$, K'$_P$, prises comme paramètres. L'application des clés précitées peut permettre également de restituer des valeurs vérifiées, d'une part, du message variable aléatoire émis par la serrure électronique B$_i$ vers la clé électronique, et, d'autre part, des données d'authentification spécifiques DA$_j$. L'opération de vérification permet à la serrure électronique B$_i$ de décider, en fonction du caractère authentique de ces dernières, de l'acception ou au contraire du refus de l'accès sollicité. Ainsi, sur réponse positive, Oui, à l'étape de vérification précitée, l'accès est accepté alors qu'au contraire, sur réponse négative, Non, l'accès est refusé.

Une description séquentielle du protocole de contrôle d'accès, objet de la présente invention, tel qu'illustré par le schéma synoptique général représenté en figure 1a, sera maintenant donnée en liaison avec la figure 1b.

Sur la figure 1b, l'étape 1000 représente l'étape de transmission par la clé électronique EK$_{kj}$ du message de demande d'identification A$_{ki}$. Cette étape est suivie d'une étape 1001 représentant la transmission du message variable aléatoire a$_{ij}$ par la serrure électronique B$_1$ vers la clé électronique EK$_{kj}$. L'étape 1002 suivante représente, à partir des données de validation initiales V$_j$ successivement de calcul de la signature du message variable aléatoire C$_1$, puis de transmission de cette signature et des données d'authentification spécifiques DA$_j$. L'étape 1002 précédente est elle-même suivie de l'étape 1003 réalisée par la serrure électronique à partir des données de validation initiales V$_i$ de l'étape de vérification de l'authenticité de la valeur de signature, en fonction des données spécifiques d'authentification.

A titre d'exemple non limitatif, on indique que dans un but de simplification, l'étape de vérification précitée peut permettre d'engendrer une variable de vérification, notée V, correspondant elle-même à une valeur logique 0 ou 1, soit à la réponse Oui ou Non mentionnée précédemment. Dans ces conditions, l'étape 1003 est alors suivie d'une étape 1004, conduite au niveau de la serrure électronique, consistant à vérifier la valeur vraie de la variable logique de vérification V ou de la réponse Oui, Non. La valeur vraie de cette dernière permet de conduire à l'autorisation de l'accès à l'étape 1006, alors que l'absence de valeur vraie conduit au refus de l'accès à l'étape 1005.

En ce qui concerne la nature des données spécifiques d'authentification $DA_j$ transmises par la clé électronique $EK_{kj}$ à la serrure électronique $B_i$, on indique que ces dernières consistent au moins, ainsi que représenté sur la figure 1a, en un certificat de clé publique associée à la clé privée de signature $K'_S$. Ce certificat de clé publique consiste en une valeur de signature numérique d'au moins une plage de validité $PH_j$ relative à un droit d'accès, et la deuxième clé publique $K'_P$.

Ainsi, compte tenu de la convention indiquée précédemment dans la description, les données spécifiques d'authentification $DA_j$ correspondent-elles à la signature $S_{KS}$ de différents arguments tels que la deuxième clé publique $K'_P$ associée à la clé privée de signature $K'_S$, au moins une plage horaire $PH_J$ associée à la deuxième clé publique $K'_P$, ces données spécifiques d'authentification Daj étant obtenues par application de la clé privée de signature $K_S$ de l'entité de signature. On comprend en particulier que différentes valeurs de plages horaires peuvent être utilisées par exemple grâce la mise en oeuvre d'un programme de diversité permettant de choisir une plage horaire spécifique parmi plusieurs par exemple.

On note toutefois qu'outre les deux arguments de deuxième clé publique $K'_P$ et $PH_j$ précités, un autre argument relatif à des données auxiliaires AUX peut être soumis à l'opération de signature $S_{KS}$ précitée. De manière avantageuse, ces données auxiliaires peuvent comprendre, de manière non limitative, un numéro de série de la clé électronique associée $EK_{kj}$, ce numéro de série représentant un code de l'indice k indicatif de la clé électronique précitée. D'autres données ou valeurs numériques peuvent être transmises par la clé électronique, par l'intermédiaire du champ relatif aux données auxiliaires, ainsi qu'il sera décrit ultérieurement dans la description.

En ce qui concerne les étapes de transmission 1000, 1001 et la sous-étape de transmission de l'étape 1002 telle que représentée en figure 1b, on indique que ces étapes sont réalisées grâce au système de transmission équipant, d'une part, la clé électronique $EK_{kj}$ et, d'autre part, la serrure $B_i$, et portant la référence $T_i$ pour cette dernière.

Enfin, dans un mode de mise en oeuvre avantageux du protocole de contrôle d'accès objet de la présente invention, l'étape de transmission de la clé électronique $EK_{kj}$ à la serrure électronique $B_i$, représentée en figure 1a et référencée 1002 en figure 1b, peut consister à transmettre, outre la valeur de signature $C_i$ du message variable aléatoire d'incitation à authentification et les données d'authentification $DA_j$, la deuxième clé publique $K'_p$ obtenue par exemple à partir des données d'authentification $DA_j$. Pour cette raison la deuxième clé publique $K'_p$ est notée entre parenthèses lors de l'étape de transmission représentée en figure 1a et référencée 1002 en figure 1b. Dans un tel cas, il n'est bien entendu pas nécessaire, lors de l'opération de validation $V_i$ de chaque serrure électronique $B_i$, de procéder à la mémorisation, dans cette serrure électronique, de cette deuxième clé publique $K'_p$. La première clé publique $K_p$ permet alors, lors de l'opération de vérification des données d'authentification $V_{KPK'P}(C_i, DA_j)$, d'attester de l'authenticité de la deuxième clé publique $K'_p$ transmise.

D'une manière générale, l'étape de vérification, par la serrure électronique, de l'authenticité de la valeur de signature peut être effectuée au moyen d'une clé secrète lorsque l'opération de calcul de signature est réalisée à partir de cette clé secrète ou d'une autre clé secrète, ou d'une clé publique lorsque l'opération de signature est réalisée à partir d'une clé privée.

Une description plus détaillée de l'étape de vérification 1003 effectuée par la serrure électronique B, sera maintenant donnée en liaison avec la figure 1c, dans le cas plus particulier non limitatif de la mise en oeuvre d'un algorithme à rétablissement de message, tel que l'algorithme RSA.

Ainsi que représenté sur la figure précitée, l'étape de vérification 1003 comporte successivement une première étape de vérification, notée 1003a, effectuée par la serrure électronique $B_i$, cette vérification consistant à vérifier l'authenticité des données spécifiques d'authentification $DA_j$ sur critère de comparaison à des données de référence, mémorisées préalablement dans les circuits mémoires de la clé électronique $EK_{kj}$. On comprend en particulier que l'application de la première clé publique $K_P$ disponible à la signature $S_{KS}$, permet bien entendu, compte tenu des conventions précédentes, d'obtenir une valeur vérifiée de la clé publique $K'_p$ associée à la clé privée de signature $K'_S$, cette valeur vérifiée de clé publique étant notée $VK'_P$, ainsi que bien entendu une valeur vérifiée de la valeur de plage horaire $PH_j$. Lorsque des données auxiliaires ont été transmises par l'intermédiaire de l'argument AUX dans la signature $S_{KS}$, ces données auxiliaires sont également restituées.

Ainsi, et de manière non limitative, les données de référence mémorisées dans les circuits mémoires de la clé électronique $EK_{kj}$ correspondent, non seulement à la deuxième clé publique $K'_P$ associée à la clé privée de signature $K'_S$, à la valeur de plage horaire $PH_j$, et le cas échéant à un numéro de série de la clé, lequel peut être mémorisé dans un circuit protégé accessible en lecture seulement. La comparaison des valeurs vérifiées suite à l'opération de vérification vis-à-vis de ces valeurs de référence peut alors être effectuée par simple comparaison d'égalité à l'étape 1003a.

A l'étape 1003a, on a simplement représenté le test d'égalité de la valeur vérifiée de la deuxième clé publique VK'$_P$ à la valeur de la deuxième clé publique mémorisée K'$_P$.

Sur réponse positive au critère de comparaison précité effectué à l'étape 1003a, une deuxième vérification est effectuée par la serrure électronique B$_i$ à l'étape 1003b. Cette deuxième vérification, ainsi que représenté sur la figure précitée, consiste à effectuer une vérification de la valeur de signature du message variable aléatoire d'incitation à authentification.

Cette deuxième vérification est notée, compte tenu des convention précédentes :

$$- \quad V_{K'_P}(C_i) \; = V_{K'_P}(S_{K'_S}(a_{ij})).$$

On comprend qu'au cours de cette deuxième étape de vérification réalisée à l'étape 1003b, on obtient ainsi une valeur vérifiée du message variable aléatoire d'incitation à authentification, valeur vérifiée Va$_{ij}$. Cette valeur vérifiée du message variable aléatoire d'incitation à authentification peut alors être comparée à la valeur du message variable aléatoire d'incitation à authentification a$_{ij}$, lequel aura bien entendu été mémorisé préalablement au niveau des circuits mémoires de la serrure électronique B$_i$.

Ainsi, on comprend que la deuxième vérification de la valeur de signature est effectuée conditionnellement à la vérification de la deuxième clé publique K'$_P$ associée à la clé privée de signature K'$_S$ , et donc en définitive en fonction des données spécifiques d'authentification DA$_j$ précitées.

D'une manière générale, on indique que la première vérification représentée à l'étape 1003a de la figure 1c de l'authenticité des données spécifiques d'authentification, peut consister à contrôler la plage de validité PH$_j$ associée à la deuxième clé publique K'$_P$. En effet, l'étape de vérification $v_{KP}$, par l'application de la première clé publique K$_P$ à la signature S$_{KS}$(K'$_P$,PH$_j$,AUX) permet, seule bien entendu, l'obtention de la valeur de la plage de validité horaire PH$_j$ associée à la deuxième clé publique K'$_P$.

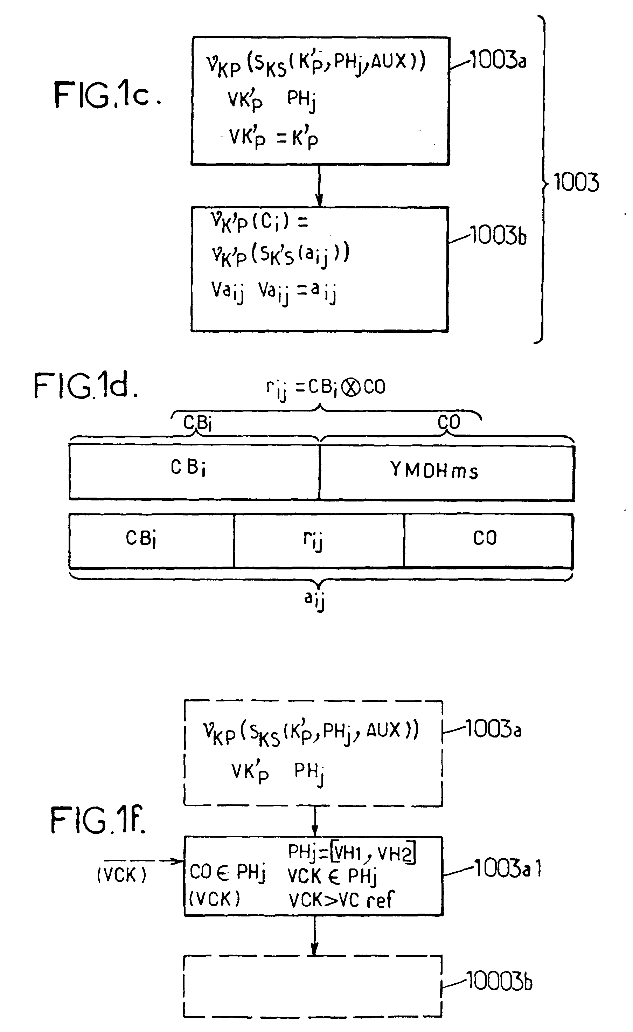

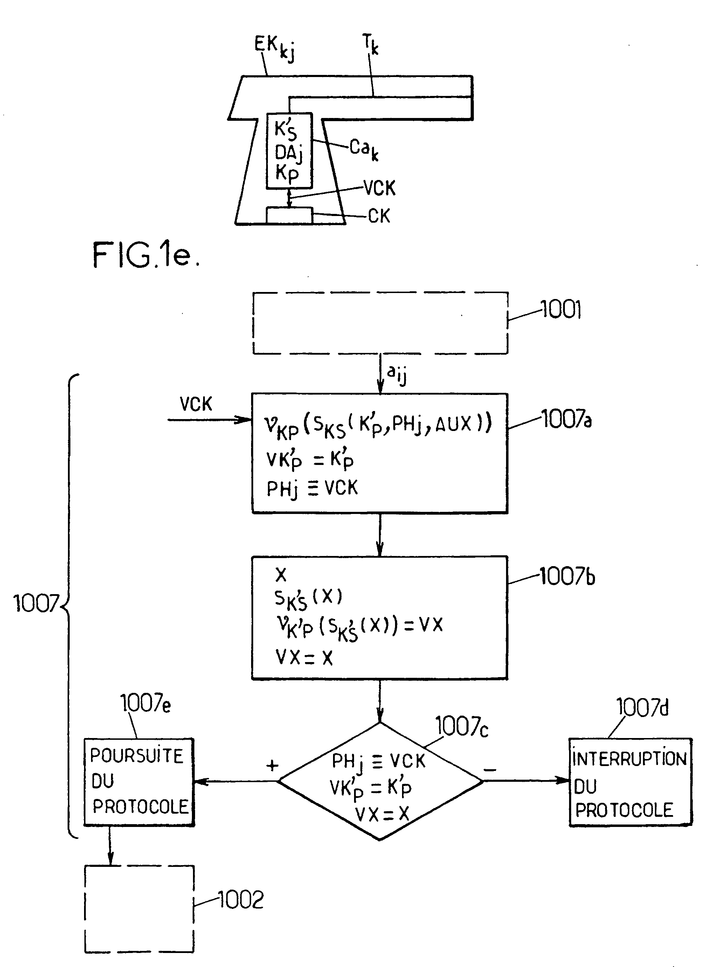

En ce qui concerne le message variable aléatoire d'incitation à authentification a$_{ij}$ mentionné précédemment dans la description, on indique, ainsi que représenté en figure 1d, que ce dernier peut être fonction d'une valeur d'identification de la serrure électronique, cette valeur d'identification étant notée CB$_i$ sur la figure 1d et pouvant correspondre à un numéro de série ou numéro arbitraire codé, attribué à la serrure électronique B$_i$ précitée.

Ainsi que représenté en outre en figure 1d, le message variable aléatoire a$_{ij}$ peut également être fonction d'une valeur variable continûment croissante, cette valeur variable continûment croissante, notée CO, s'analysant en une valeur de comptage, laquelle peut correspondre à une valeur de date exprimée en années, Y, mois, M, jours, D, heures, H, minutes, m, et secondes, s.

On comprend par exemple que le champ CB$_i$ et le champ CO, relatifs à la valeur d'identification de la serrure électronique et à la valeur variable continûment croissante, peuvent être codés sur un même nombre de bits, 32 bits par exemple ou plus, chaque champ pouvant alors être combiné bit à bit à partir d'une loi de composition logique par exemple, pour engendrer une composante du message variable aléatoire d'incitation à authentification, notée r$_{ij}$, ainsi que représenté sur la figure 1d. Sur cette figure, la loi de composition est notée ⊗, une loi de composition telle qu'une opération OU exclusif ou autre pouvant par exemple être envisagée. Le message variable aléatoire a$_{ij}$ est ensuite obtenu par concaténation à la composante r$_{ij}$ des champs CB$_i$ et CO. Un tel mode de codage permet de garantir le caractère non répétitif du message variable aléatoire ainsi obtenu.

Alors que le champ relatif au numéro de série de la serrure électronique CB, peut être donné par tout élément mémoire protégé disponible au niveau des circuits de mémorisation de la serrure électronique précitée, on indique que la valeur de comptage CO peut être délivrée soit par un compteur incrémental, soit par une horloge interne disponible au niveau de chaque serrure électronique. La mise en oeuvre d'un compteur incrémental présente l'avantage d'une simplification des circuits nécessaires à la mise en oeuvre de chaque serrure électronique.

Une variante particulièrement avantageuse de mise en oeuvre du protocole de contrôle d'accès entre une clé électronique et une serrure électronique, conforme à l'objet de la présente invention, sera maintenant décrite en liaison avec la figure 1e.

Sur la figure 1e, on a représenté la clé électronique EK$_{kj}$ telle que représentée par exemple en figure 1a. Toutefois, outre les circuits de calcul Ca$_k$ associés à la clé électronique précitée, on indique que celle-ci est munie d'une horloge interne, notée CK sur la figure 1e précitée. Cette horloge interne délivre un signal d'horloge, noté VCK, à l'unité de calcul Ca$_k$ correspondante.

Dans ces conditions, ainsi que représenté sur la figure 1e, le protocole, objet de la présente invention, consiste en outre, en une étape de vérification auxiliaire d'autorisation de calcul de signature du message variable aléatoire d'incitation à authentification. Cette vérification auxiliaire est notée 1007 sur la figure 1e. Elle est conduite par la clé électronique EK$_{kj}$ suite à la réception du message variable aléatoire d'incitation à authentification a$_{ij}$ à l'étape 1001 représenté en figure 1a, mais préalablement à l'étape de calcul et de transmission par la clé électronique d'une valeur de signature représentée à l'étape 1002 sur la figure précitée.

Cette étape de vérification auxiliaire 1007 consiste en une vérification, au moyen de la première clé publique $K_P$, du certificat de clé publique et de la plage de validité $PH_j$ associée à la deuxième clé publique précitée $K'_P$ vis-à-vis de l'horloge interne.

Compte tenu des conventions précédentes, l'opération de vérification est notée :

$$V_{KP}(S_{KS}(K'_P, PH_j, AUX), K'_P) = Oui/Non,$$

la deuxième clé publique $K'_P$ étant prise comme paramètre. Toutefois, la mise en oeuvre d'un algorithme à rétablissement de message conduit à une opération notée :

$$V_{KP}(S_{KS}(K'_P, PH_j, AUX)).$$

Cette opération permet d'obtenir la valeur vérifiée $VK'_P$ de la deuxième clé publique, laquelle, ainsi que mentionné précédemment, peut être comparée à la valeur de la deuxième clé publique $K'_P$.

L'étape de vérification précitée permet alors d'obtenir la plage de validité horaire $PH_j$, c'est-à-dire de la valeur vérifiée de celle-ci. La valeur du signal d'horloge VCK est alors comparée à la plage de validité horaire $PH_j$, ce qui permet en fait de vérifier la validité de la deuxième clé publique $K'_P$ à laquelle est associée la plage de validité horaire précitée. A titre d'exemple non limitatif, on indique que, pour une plage de validité horaire donnée, la valeur du signal d'horloge VCK peut être comparée aux bornes délimitant la plage de validité horaire $PH_j$ précitée.

L'étape 1007a est alors suivie d'une étape 1007b, consistant en une vérification de l'association de la deuxième clé privée de signature $K'_S$ à la deuxième clé publique $K'_P$ dont la validité a été vérifiée à l'étape 1007a précédente. L'opération de vérification d'association réalisée à l'étape 1007b peut consister, ainsi que représenté sur la figure 1e, à calculer une signature, notée $S_{K'S}(X)$, cette signature étant obtenue par application de la deuxième clé privée de signature $K'_S$ à une variable aléatoire X engendrée par la clé électronique $EK_{kj}$. A cette valeur de signature de vérification $S_{K'S}(X)$ est alors appliquée une étape de vérification proprement dite, constituant l'étape de vérification d'association, cette vérification portant sur la signature calculée précédemment et étant notée :

$$V_{K'P}(S_{K'S}(X)).$$

Cette étape de vérification restitue une valeur vérifiée de la variable aléatoire X, laquelle est notée VX à l'étape 1007b. Un test de comparaison de la valeur vérifiée VX de la variable aléatoire X et de la variable aléatoire X mémorisée précédemment permet de conclure à la validité de l'association de la deuxième clé privée de signature $K'_S$ à la deuxième clé publique $K'_P$ dont la validité a été vérifiée à l'étape précédente 1007a.

La vérification de la compatibilité de la plage de validité horaire $PH_j$ avec le signal d'horloge VCK, de l'identité de la valeur vérifiée $VK'_P$ de la deuxième clé publique $K'_P$ à la valeur de la deuxième clé publique $K'_P$ et de la valeur vérifiée de la variable aléatoire VX à la valeur de la variable aléatoire X en un test de réponse positive 1007c, tel que représenté en figure 1e, permet de poursuivre, à l'étape 1007e, le protocole conforme à l'objet de la présente invention, laquelle est alors suivie de l'étape 1002 de signature du message variable aléatoire d'incitation à authentification $a_{ij}$, ou respectivement, sur réponse négative, en une étape 1007d, d'une interruption du protocole précité.

La mise en oeuvre des opérations de vérification 1007a et 1007b à partir des algorithmes de vérification de signature à rétablissement de message précédemment cités, tels que l'algorithme RSA, pourra être réalisée de préférence lorsque, dans l'étape de transmission ultérieure de la clé électronique $EK_{kj}$ à la serrure électronique $B_i$, il est procédé à la transmission de la deuxième clé publique $K'_p$. Dans tout autre cas, en l'absence d'une telle transmission, l'opération de vérification peut être ramenée à une opération du type :

$$V_{KP}(S_{KS}(K'_P, PH_j, AUX), K'_p) = Oui/Non,$$

la deuxième clé publique $K'_p$ étant prise comme paramètre.

En outre, le protocole, objet de la présente invention, peut être adapté de façon à limiter toute attaque hors de la plage de validité horaire $PH_j$ associée à la deuxième clé publique $K'_p$.

Dans ce but, ainsi que représenté en figure 1f, au cours de l'étape de vérification par la serrure électronique $B_i$ de l'authenticité de la valeur de signature, étape 1003 sur la figure 1a, et de manière plus particulière, étapes 1003a et 1003b de la figure 1c, suite à la première étape de vérification 1003a de l'authenticité des données spécifiques d'authentification DA$_j$, consistant à contrôler la plage de validité associée à la deuxième clé publique K'$_P$ mais préalablement à la deuxième étape de vérification 1003b représentée en figure 1c, une pluralité de tests représentés en 1003a$_1$, figure 1f, peut être prévue, de façon à limiter toute attaque hors de la plage de validité horaire précitée. Sur la figure 1f, la pluralité de tests est représentée de manière non limitative en une comparaison de la valeur de comptage CO délivrée par la serrure électronique B$_i$ ou, le cas échéant, d'un signal horaire délivré par une horloge lorsque la serrure électronique est munie d'une horloge, dans la plage de validité horaire précitée. De manière plus spécifique, ce test peut consister à comparer la valeur de comptage CO aux valeurs limites définissant la plage de validité horaire PH$_j$ précitée par exemple. En cas de non-appartenance de la variable de comptage CO ou du signal horaire correspondant à la plage de validité horaire, toute tentative d'accès est refusée par la serrure électronique B$_i$. D'autres tests limitant l'attaque hors de la plage de validité peuvent être envisagés.

Pour ce qui concerne la mise en oeuvre de tests visant à limiter toute attaque hors d'une plage horaire PH$_j$ déterminée, un mode de mise en oeuvre préférentiel non limitatif sera décrit ci-après, dans le cas où la clé électronique est munie d'une horloge temps réel. Lors de toute tentative d'accès, les étapes de vérification telles que 1007a ayant été valablement effectuées au niveau de la clé électronique EK$_{kj}$, en particulier celle de la compatibilité de la variable horaire délivrée par le signal d'horloge VCK avec la plage horaire PH$_j$, on mémorise dans la clé électronique EK$_{kj}$ la variable horaire courante VCK délivrée par l'horloge temps réel.

Lors de l'étape de transmission de la clé électronique EK$_{kj}$ vers la serrure électronique B$_i$, représentée Fig. 1a et référencée 1002 en Fig.1b, on transmet, outre la valeur de signature, C$_i$, et les données d'authentification, DA$_j$, ainsi que le cas échéant la deuxième clé publique K'$_p$, cette variable horaire VCK, laquelle, pour cette raison, est représentée entre parenthèses.

Les étapes suivantes de vérification peuvent alors être conduites dans la serrure électronique B$_i$.

Ainsi que représenté sur la figure 1f, pour une valeur de comptage CO délivrée par un compteur équipant la serrure électronique B$_i$, une valeur de comptage à l'instant de la tentative d'accès et une valeur de référence VC$_{ref}$, correspondant par exemple à une valeur de comptage lors d'une tentative d'accès précédente, sont mémorisées dans la serrure.

Pour une plage horaire PH$_j$ réduite à un intervalle temporel [VH$_1$, VH$_2$], on vérifie alors que la variable horaire VCK mémorisée et transmise est postérieure à VH$_1$ et antérieure à VH$_2$ et qu'en outre, VCK est postérieure à VC$_{ref}$. Si l'une des vérifications précédentes n'est pas satisfaite, l'accès à la serrure B$_i$ est interdit. Il est accepté dans le cas contraire.

Bien entendu, la plage PH$_j$ peut, de manière non limitative, comprendre plusieurs intervalles temporels disjoints. Dans ce cas, la plage horaire PH$_j$ peut être exprimée sous forme d'une union d'intervalles temporels :

$$PH_j = [VH_1, VH_2] \cup [VH_3, VH_4] \cup ... \cup [VH_{n-1}, VH_n]$$

U représentant le symbole UNION.

Les bornes délimitant chaque intervalle temporel peuvent avantageusement être exprimées chacune comme une date en jour, mois, année et un horaire en heures, minutes, secondes.

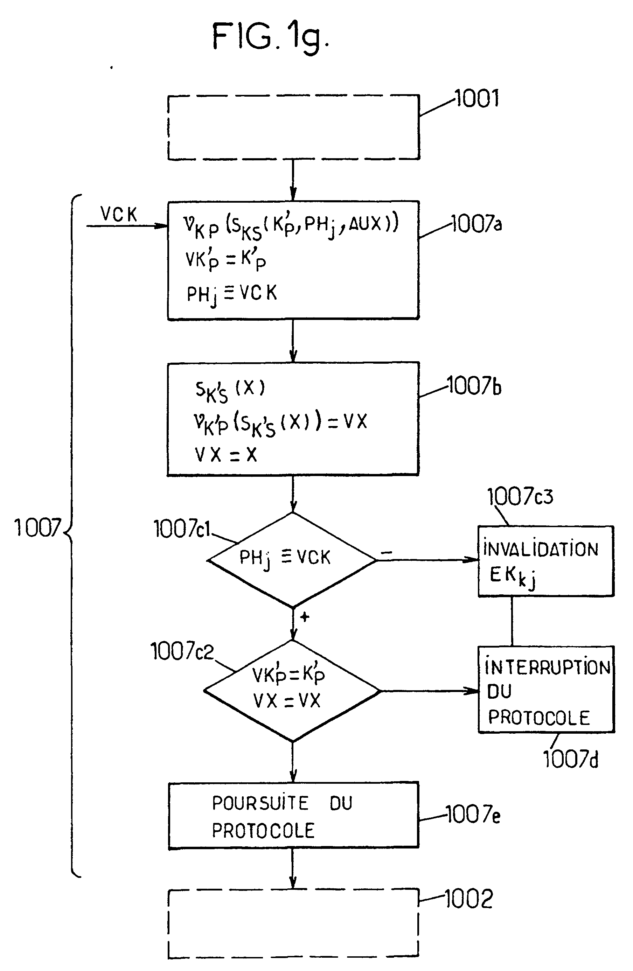

Afin de conférer un très haut niveau de sécurité au protocole de contrôle d'accès, objet de la présente invention, des mesures plus strictes encore peuvent être prévues, en particulier au niveau de la clé électronique EK$_{kj}$ afin de limiter encore tout risque d'utilisation frauduleuse d'une telle clé électronique, en particulier en cas de perte ou de vol. Dans ce but, ainsi que représenté en figure 1g, l'étape 1002 représentée en figure 1a de calcul d'une valeur de signature du message variable aléatoire d'incitation à authentification peut être précédée d'une étape de vérification auxiliaire d'autorisation de signature, reprenant certains des éléments de l'étape de vérification 1007 représentée à la figure 1e, mais augmentant le niveau de sécurité de cette vérification en introduisant une étape d'auto-invalidation de la clé électronique EK$_{kj}$ dans les conditions qui seront explicitées ci-après.

Pour la mise en oeuvre de l'étape de vérification auxiliaire représentée en figure 1g, de la même manière que dans le cas de la mise en oeuvre de l'étape de vérification auxiliaire de la figure 1e, la clé électronique EK$_{kj}$ est munie d'une horloge CK délivrant un signal d'horloge VCK.

Dans ces conditions, ainsi que représenté sur la figure 1g, l'étape de vérification auxiliaire 1007 comprend une étape de contrôle d'appartenance d'une variable temporelle, le signal d'horloge VCK délivré par l'horloge temps réel CK, vis-à-vis de la plage de validité horaire PH$_j$. On comprend dans ce but que l'étape 1007a représentée en figure 1g correspond sensiblement à l'étape 1007a représentée en figure 1e.

Il en est de même pour l'étape 1007b représentée sur les deux figures précitées.

Dans le cas de la figure 1g, l'étape 1007c de la figure 1e est en fait subdivisée en deux sous-étapes 1007c$_1$ et 1007c$_2$ par exemple.

L'étape 1007c$_1$ consiste à effectuer un contrôle d'appartenance de la variable temporelle VCK délivrée par

**EP 1 055 203 B1**

l'horloge temps réel vis-à-vis de la plage de validité horaire $PH_j$. Sur réponse positive au test de l'étape $1007c_1$, le test $1007c_2$ consiste à réaliser par exemple la comparaison de la valeur vérifiée $VK'_P$ de la deuxième clé publique $K'_P$ à la valeur de la deuxième clé publique $K'_P$ ainsi que de la valeur vérifiée $VX$ de la variable aléatoire $X$ à la variable aléatoire $X$ précitée.

En cas de réponse négative au test de l'étape $1007c_1$ par exemple, c'est-à-dire en l'absence d'appartenance de la variable temporelle $VCK$ à la plage horaire $PH_j$, le protocole, objet de la présente invention, consiste à mettre en oeuvre une étape $1007c_3$ d'invalidation de la clé électronique $EK_{kj}$. L'étape d'invalidation $1007c_3$ conduit alors bien entendu à une étape 1007d d'interruption du protocole de contrôle d'accès, objet de la présente invention, la clé électronique étant de fait inutilisable.

Pour réaliser la mise en oeuvre de l'invalidation de la clé électronique $EK_{kj}$, on indique que différents recours techniques peuvent être mis en oeuvre, tels que mise en court-circuit franc de la tension d'alimentation des circuits électroniques, c'est-à-dire du circuit de calcul $Ca_k$ de la clé électronique, et dissipation totale de l'énergie électrique permettant l'alimentation de ces circuits, ou le cas échéant positionnement d'une ou plusieurs variables de mise hors service permettant d'inhiber le fonctionnement de la clé électronique considérée.

Au contraire, sur réponse positive au test de l'étape $1007c_2$ représenté en figure 1g, la réponse positive au test précité conduit à la poursuite du protocole à l'étape 1007e, c'est-à-dire à l'étape 1002 de calcul de signature de la variable aléatoire d'incitation à authentification $a_{ij}$ ainsi que représenté en figure 1a.

Différentes variantes de mise en oeuvre du protocole de contrôle d'accès, objet de la présente invention, peuvent bien entendu être envisagées, en particulier afin d'assurer un niveau de sécurité optimum, tant au niveau de chaque clé électronique $EK_{kj}$ que de chaque serrure électronique $B_i$.

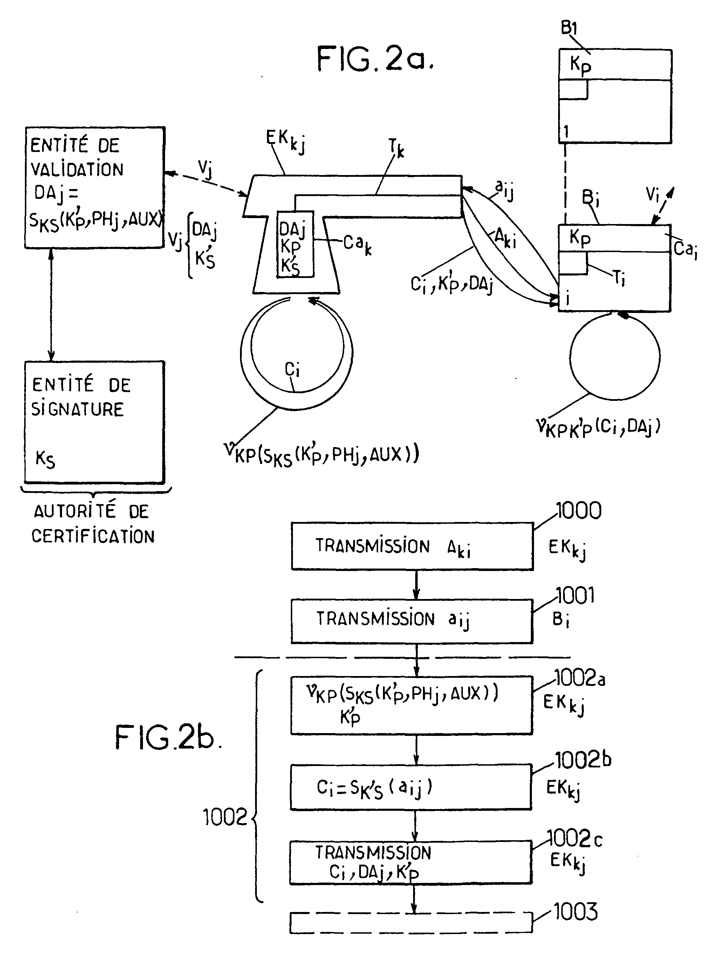

Sur la figure 2a, on a représenté une variante de mise en oeuvre du protocole de contrôle d'accès, objet de la présente invention, particulièrement remarquable par le fait que toute mémorisation d'une deuxième clé publique $K'_P$, au niveau de chaque serrure électronique $B_i$, est supprimée.

Dans ce but, d'une première part, on indique que l'opération de validation de chaque serrure électronique $B_i$ consiste en une opération de validation $V_i$, dans laquelle seule la première clé publique $K_P$ est mémorisée au niveau des mémoires des organes de calcul de chaque serrure électronique $B_i$.

D'une deuxième part, l'opération de validation $V_j$ de chaque clé électronique $EK_{kj}$ consiste à transmettre uniquement les données spécifiques d'authentification $DA_j$ et la deuxième clé privée de signature $K'_S$. La deuxième clé privée de signature $K'_S$ est transmise et mémorisée dans les mémoires des circuits de calcul $Ca_k$ de la clé électronique $EK_{kj}$.

Au cours d'une tentative d'accès, conformément au protocole, objet de la présente invention, les étapes de transmission du message d'identification de demande d'accès $A_{ki}$ et de transmission de la serrure électronique $B_i$ à la clé électrenique $EK_{kj}$ du message variable aléatoire d'incitation à authentification $a_{ij}$ sont inchangées.

Au contraire, l'étape 1002 précédemment décrite de calcul de la valeur de signature du message variable aléatoire d'incitation à authentification $a_{ij}$ est modifiée de la façon ci-après. Une vérification des données d'authentification est en premier lieu effectuée, cette vérification étant notée $V_{KP}(S_{KS}'K'_P,PH_j,AUX)$.

Avec la convention précédente, la deuxième clé publique $K'_P$ est restituée, ce qui permet ensuite d'effectuer, à partir de la deuxième clé privée de signature $K'_S$ disponible, l'opération de calcul de valeur de signature du message variable aléatoire, notée $C_i = S_{K'S}(a_{ij})$. Cette valeur de signature étant disponible et mémorisée, l'opération de transmission de la signature du message variable aléatoire d'incitation à authentification $C_i$, des données spécifiques d'authentification $DA_j$ et de la deuxième clé publique $K'_p$ à la serrure $B_i$ peut alors être effectuée.

Le protocole, objet de la présente invention, est alors repris à l'étape 1003 de la figure la par exemple par la serrure $B_i$.

L'ensemble des étapes de vérification puis de calcul de la valeur de signature $C_i$ suivi de la transmission précitée, est représenté aux étapes 1002a, 1002b, 1002c de la figure 2b, préalablement à la mise en oeuvre de l'étape 1003 précédemment mentionnée.

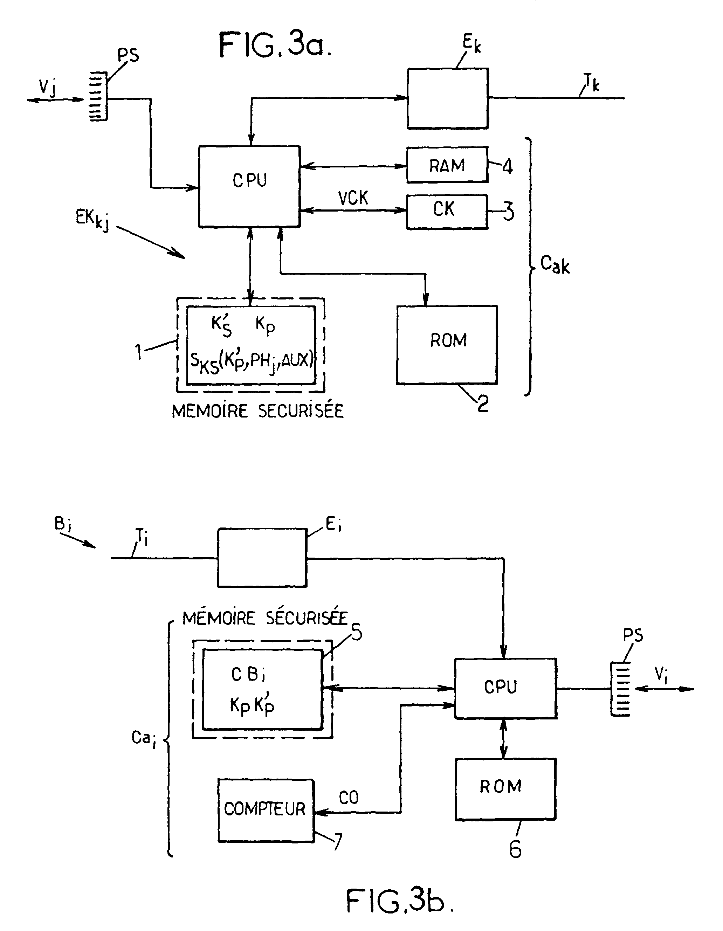

Des éléments descriptifs complémentaires seront maintenant donnés relativement à l'architecture d'une clé électronique et d'une serrure électronique permettant la mise en oeuvre du protocole de contrôle d'accès, conforme à l'objet de la présente invention, en liaison avec les figures 3a et 3b.

Sur la figure 3a, on a représenté une clé électronique $EK_{kj}$, laquelle est munie d'un module de calcul cryptographique, noté $Ca_k$, et du module de transmission de messages ou de données, noté $E_k$, accompagné d'une antenne d'émission-réception de type filaire, notée $T_k$, ainsi que mentionné précédemment dans la description. Le module de calcul cryptographique comprend, outre une unité centrale de calcul, notée CPU, une zone mémoire à accès protégé, notée 1, permettant la mémorisation d'au moins une valeur de signature d'une plage de validité horaire attribuée à la clé électronique, cette valeur de signature correspondant bien entendu aux données spécifiques d'authentification $DA_j$ précédemment mentionnées dans la description. La zone mémoire à accès protégé 1 permet également la mémorisation d'une clé de vérification de signature, la première clé publique $K_P$, c'est-à-dire de la signature précitée, constituée par les données spécifiques d'authentification. Elle permet également d'assurer la mémorisation d'une clé de signature, la deuxième clé de signature K'$_S$ mentionnée précédemment dans la description. Ce mode de réalisation correspond au mode de mise en oeuvre du protocole, objet de la présente invention, tel que représenté en figure 1a.

Le module de calcul cryptographique Ca$_k$ comporte également une mémoire accessible en lecture, notée 2, de type ROM, permettant l'appel, par l'unité centrale CPU, de programmes de calcul de la valeur de signature d'un message variable aléatoire, le message a$_{ij}$ précédemment mentionné dans la description, et de vérification de signature à partir des clés de signature, respectivement de vérification de signature, les clés K'$_S$ et K$_P$ précédemment mentionnées dans la description. La mémoire accessible en lecture 2 de la clé permet la mémorisation de programmes de calcul de valeurs de signature du message variable aléatoire et de vérification de signatures à partir des clés de signature K'$_S$ et de vérification de signatures K$_P$, K'$_P$, selon les organigrammes représentés en figures le et 1g précédemment décrites dans la description.

Outre ces éléments, en fonction du mode de mise en oeuvre du protocole, objet de la présente invention, le module de calcul cryptographique Ca$_k$ comporte par exemple une horloge, portant la référence 3, délivrant le signal d'horloge VCK mentionné dans la description à l'unité centrale CPU, ainsi que bien entendu une mémoire de travail de type RAM, portant la référence 4, accessible en lecture et en écriture.

Enfin, l'ensemble est muni d'un port série, noté PS, permettant la mise en oeuvre de l'étape de validation V$_j$ précédemment mentionnée dans la description.

En ce qui concerne la serrure électronique B$_i$ représentée en figure 3b, celle-ci est bien entendu munie d'un module de calcul cryptographique, noté Ca$_i$, et d'un module de transmission-réception de messages E$_i$ auxquels est associée une antenne, représentée de type filaire de manière non limitative sur la figure 3b, portant la référence T$_i$.

Le module de calcul cryptographique Ca$_i$ comporte, outre une unité centrale de calcul, notée également CPU, une zone mémoire à accès protégé à l'unité centrale de calcul. Cette zone mémoire à accès protégé permet la mémorisation d'au moins une clé publique de vérification de signature, c'est-à-dire la première clé publique K$_P$ et la deuxième clé publique K'$_P$ dans le cas de mise en oeuvre du protocole, objet de la présente invention tel que représenté en figure la, ou respectivement la mémorisation d'une seule clé publique, la première clé publique K$_P$ dans le cas de mise en oeuvre du protocole, objet de la présente invention selon les figures 2a et 2b.

En outre, reliée à l'unité centrale de calcul, est également prévue une mémoire accessible en lecture 6, permettant, par l'unité centrale, l'appel de programmes de vérification de signature à partir de la clé ou des clés publiques K$_P$, K'$_P$ précédemment mentionnées. La mémoire accessible en lecture 6 permet par exemple la mémorisation des programmes de vérification de signature, dont l'organigramme correspond à celui représenté en figures 1d, 1c et 1f, précédemment décrite dans la description. De même, un compteur 7 ou le cas échéant une horloge en temps réel et un port série PS sont prévus.

On a ainsi décrit un protocole de contrôle d'accès entre une clé électronique et une serrure électronique opérant ce contrôle d'accès particulièrement performant dans la mesure où la clé électronique, munie d'un potentiel cryptographique, est en mesure d'authentifier sa tentative d'accès vis-à-vis de chacune des serrures électroniques accédées.

Un tel protocole apparaît d'un intérêt majeur en raison du fait que l'opération de signature par la clé du message variable d'incitation à authentification constituant un droit d'accès de nature variable, changeant à chaque transaction, l'attaque par rejeu est ainsi évitée.

Enfin, le protocole, objet de la présente invention, peut être mis en oeuvre de façon à obtenir une optimisation du niveau de sécurité globale dans la mesure où la mémorisation d'une seule clé publique de vérification de signature au niveau de chaque serrure électronique peut être réalisée. Il constitue un procédé de sécurisation de contrôle d'accès. Cette optimisation est adaptée en fonction des applications.

Le protocole, objet de la présente invention, et la clé et la serrure électronique permettant la mise en oeuvre d'un tel protocole apparaissent particulièrement adaptés à la gestion par des préposés habilités de coffres de valeurs ou de boîtes à lettres par exemple.

**Revendications**

**1.** Protocole de contrôle d'accès entre une clé électronique (EK$_{kj}$) et une serrure électronique (B$_i$) opérant ce contrôle d'accès, dans lequel, suite à la mise en présence de ladite clé électronique (EK$_{kj}$) et de ladite serrure électronique (B$_i$), une transmission de ladite serrure électronique à ladite clé électronique d'un message (a$_{ij}$) variable aléatoire d'incitation à authentification de cette clé électronique (EK$_{kj}$) est effectuée, **caractérisé en ce que**, sur réception dudit message (a$_{ij}$) variable aléatoire d'incitation à authentification, celui-ci consiste au moins successivement en :

- un calcul et une transmission, de ladite clé électronique (EK$_{kj}$) à ladite serrure électronique (B$_i$), d'une valeur de signature numérique dudit message variable aléatoire d'incitation à authentification à partir d'une clé privée de signature (K'$_s$) et de données spécifiques d'authentification (DA$_j$), lesdites données spécifiques d'authentification transmises par ladite clé électronique (EK$_{Kj}$) à ladite serrure électronique (B$_i$) consistant au moins en un certificat de clé publique (K'$_P$) associée à ladite clé privée de signature (K'$_s$), ledit certificat de clé publique consistant en une valeur de signature numérique d'au moins une plage de validité (PH$_j$) relative à un droit d'accès, et de ladite clé publique (K'p), ladite valeur de signature étant calculée au moyen d'une autre clé privée de signature (K$_s$) à laquelle est associée une autre clé publique (K$_p$) et, suite à la réception par ladite serrure électronique de ladite valeur de signature (C$_i$) et desdites données spécifiques d'authentification (DAj),

- une vérification (1003) $U_{KPK'P}$ ((C$_i$,DA$_j$)), par ladite serrure électronique (B$_i$), de l'authenticité de ladite valeur de signature (C$_i$), en fonction desdites données spécifiques d'authentification (DA$_j$), et, sur réponse positive ou négative de ladite vérification,

- acceptation, respectivement refus, dudit accès.

2. Protocole selon la revendication 1, **caractérisé en ce que** ladite étape de vérification, par ladite serrure électronique, de ladite valeur de signature, comporte successivement :

- une première vérification (1003a), par ladite serrure électronique (B$_i$) de l'authenticité desdites données spécifiques d'authentification sur critère de comparaison à des données de référence, et, sur réponse positive audit critère de comparaison,
- une deuxième vérification (1003b), par ladite serrure électronique (B$_i$) de ladite valeur de signature (C$_i$), en fonction desdites données spécifiques d'authentification (DA$_j$).

3. Protocole selon les revendications 1 et 2, **caractérisé en ce que** ladite première étape de vérification par ladite serrure électronique de l'authenticité desdites données spécifiques d'authentification (DA$_j$) consiste à contrôler ladite plage de validité (PH$_j$) associée à ladite clé publique (K'$_p$).

4. Protocole selon la revendication 2, **caractérisé en ce que** la plage de validité (PH$_j$) comprend plusieurs intervalles temporels disjoints.

5. Protocole selon la revendication 2 ou 3, **caractérisé en ce que** chaque plage de validité (PH$_j$) consiste en au moins un intervalle temporel comportant deux bornes exprimées chacune comme une date en jour, mois, année et un horaire en heures, minutes, secondes.

6. Protocole selon l'une des revendications précédentes, **caractérisé en ce que** ledit message (a$_{ij}$) variable aléatoire d'incitation à authentification est fonction d'une valeur d'identification (CB$_i$) de ladite serrure électronique (B$_i$) et d'une valeur variable (CO) continûment croissante.

7. Protocole selon l'une des revendications 1 à 6, **caractérisé en ce que**, suite à la réception dudit message (a$_{ij}$) variable aléatoire d'incitation à authentification par ladite clé électronique (EK$_{Kj}$) mais préalablement à l'étape de calcul et de transmission par ladite clé électronique d'une valeur de signature (C$_i$), ladite clé électronique (EK$_{Kj}$) étant munie d'une horloge interne, ledit protocole consiste en outre, en une étape (1007) de vérification auxiliaire d'autorisation de calcul de signature dudit message variable aléatoire d'incitation à authentification, ladite étape de vérification (1007) auxiliaire consistant à :

- vérifier (1007a), au moyen de l'autre clé publique (K$_p$) associée à ladite autre clé privée de signature (K$_s$), ledit certificat de clé publique (K'$_p$) et ladite plage de validité (PH$_j$) associée à cette clé publique (K'$_p$), vis-à-vis de ladite horloge interne, ladite vérification permettant en fait de vérifier la validité de ladite clé publique (K'$_p$) ;
- vérifier (1007b) l'association de ladite clé privée de signature (K'$_s$) à ladite clé publique (K'$_p$), dont la validité a été vérifiée à l'étape précédente, et, sur critère (1007c) de réponse positive et négative aux deux étapes de vérification précédentes,
- poursuivre (1007e), respectivement interrompre (1007d), ledit protocole de contrôle d'accès.

8. Protocole selon l'une des revendications 2 à 7, **caractérisé en ce que**, au cours de ladite étape (1003) de vérification par ladite serrure électronique (B$_i$) de l'authenticité de ladite valeur de signature (C$_i$), suite à ladite première étape (1003a) de vérification par cette serrure électronique (B$_i$) de l'authenticité des données spécifiques d'authentification (DA$_j$) consistant à contrôler ladite plage de validité (PH$_j$) associée à ladite clé publique (K'$_p$) mais préalablement à ladite étape (1003b) de deuxième vérification par cette serrure électronique (B$_i$) de l'authenticité de ladite valeur de signature, ledit protocole comprend en outre une pluralité de tests (1003a$_1$) limitant toute attaque hors de ladite plage de validité (PH$_j$).

**9.** Protocole selon l'une des revendications 1 à 8, **caractérisé en ce que** préalablement à ladite étape de calcul et de transmission de ladite clé électronique ($EK_{kj}$) à ladite serrure électronique ($B_i$) d'une valeur de signature ($C_i$) dudit message ($a_{ij}$) variable aléatoire d'incitation à authentification et de données spécifiques d'authentification ($DA_j$), ladite clé électronique ($EK_{kj}$) étant munie d'une horloge temps réel, ledit protocole comprend :

- une étape ($1007c_1$) de contrôle d'appartenance d'une variable temporelle délivrée par ladite horloge temps réel vis-à-vis de ladite plage de validité ($PH_j$), et, sur réponse négative à ladite étape de contrôle d'apparte-nance,
- une étape ($1007c_3$) d'invalidation de ladite clé électronique interrompant ledit contrôle d'accès et entraînant le refus dudit accès par ladite serrure électronique.

**10.** Clé électronique comprenant des moyens ($C_{ak}$) de calcul cryptographique et des moyens ($T_k$) de transmission de messages ou de données pour la mise en oeuvre du protocole de contrôle d'accès à une serrure électronique ($B_i$) par cette clé électronique ($EK_{kj}$) selon l'une des revendications 1 à 9, **caractérisée en ce que**, outre une unité centrale de calcul (CPU), lesdits moyens ($C_{ak}$) de calcul cryptographique comportent au moins :

- une zone mémoire (1) à accès protégé, permettant la mémorisation d'au moins une clé privée de signature ($K'_s$) et de données spécifiques d'authentification ($DA_j$), ces données spécifiques d'authentification ($DA_j$) con-sistant au moins en un certificat de clé publique ($K'_P$) constitué par une valeur de signature numérique d'au moins une plage de validité ($PH_j$) relative à un droit d'accès, et de ladite clé publique ($K'_p$);
- une mémoire (4) accessible en lecture, permettant l'appel de programmes de calcul de la valeur de signature numérique d'un message variable aléatoire ($a_{ij}$), délivré par cette serrure électronique ($B_i$), au moyen de ladite clé privée de signature ($K'_s$).

**11.** Serrure électronique comprenant des moyens ($C_{ai}$) de calcul cryptographique et des moyens ($T_i$) de transmission de messages ou de données pour la mise en oeuvre d'un protocole de contrôle d'accès à cette serrure électronique par une clé électronique ($EK_{kj}$), en transmettant à ladite clé électronique un message ($a_{ij}$) variable aléatoire d'in-citation à authentification de cette clé électronique ($EK_{kj}$), **caractérisée en ce que**, outre une unité centrale de calcul (CPU), lesdits moyens ($C_{ai}$) de calcul comportent au moins :

- une zone mémoire (5) à accès protégé, permettant la mémorisation d'au moins une première clé publique ($K_p$) de vérification de signature ;
- une mémoire (6) accessible en lecture, permettant l'appel de programmes de vérification de l'authenticité d'une valeur de signature numérique ($C_i$) dudit message variable aléatoire reçue de ladite clé électronique, en fonction de données spécifiques d'authentification ($DA_j$) transmises par ladite clé électronique, consistant au moins en un certificat de deuxième clé publique ($K'_p$), ledit certificat de clé publique consistant en une valeur de signature numérique d'au moins une plage de validité ($PH_j$) relative à un droit d'accès, et de ladite deuxième clé publique ($K'_p$), calculée au moyen d'une première clé privée de signature ($K_s$) à laquelle est associée la première clé publique ($K_p$), ladite deuxième clé publique ($K'_p$) étant associée à une deuxième clé privée de signature ($K'_s$) à l'origine de ladite signature numérique ($C_i$) dudit message variable aléatoire.

**Patentansprüche**

**1.** Zugangskontrollprotokoll zwischen einem elektronischen Schlüssel ($EK_{kj}$) und einen elektronischen Schloss ($B_i$), das diese Zugangskontrolle durchführt, bei dem nach der Einrichtung des elektronischen Schlüssels ($EK_{kj}$) und des elektronischen Schlosses ($B_i$) eine Übertragung einer zufälligen variablen Erregerbotschaft ($a_{ij}$) mit Authenti-fizierung dieses elektronischen Schlüssels ($EK_{kj}$) von dem elektronischen Schloss zu dem elektronischen Schlüssel erfolgt, **dadurch gekennzeichnet, dass** bei Empfang der zufälligen variablen Erregerbotschaft ($a_{ij}$) mit Au-thentifizierung diese nacheinander mindestens besteht in:

- von dem elektronischen Schlüssel ($EK_{kj}$) zu dem elektronischen Schloss ($B_i$) einer Berechnung und einer Übertragung eines digitalen Signaturwertes der zufälligen variablen Erregerbotschaft mit Authentifizierung aus einem privaten Signaturschlüssel ($K'_s$) und spezifischen Authentifizierungsdaten ($DA_j$), wobei die von dem elektronischen Schlüssel ($EK_{kj}$) zu dem elektronischen Schloss ($B_i$) übertragenen spezifischen Authentifizie-rungsdaten mindestens in einem Zertifikat eines öffentlichen Schlüssels ($K'_p$) in Verbindung mit dem privaten Signaturschlüssel ($K'_s$) bestehen, wobei das Zertifikat des öffentlichen Schlüssels in einem digitalen Signaturwert von mindestens einem Gültigkeitsbereich ($PH_j$), bezogen auf ein Zugangsrecht, und dem öffentlichen

Schlüssel ($K'_p$) besteht, wobei der Signaturwert mit Hilfe eines weiteren privaten Signaturschlüssels ($K_s$) berechnet wird, dem ein weiterer öffentlicher Schlüssel ($K_p$) zugeordnet ist, und nach dem Empfang des Signaturwertes ($C_i$) und der spezifischen Authentifizierungsdaten ($DA_j$) durch das elektronische Schloss,

- Überprüfung (1003) $U_{KPK'P}$ (($C_i$, $DA_J$)) der Authentizität des Signaturwertes ($C_i$) durch das elektronische Schloss ($B_i$) in Abhängigkeit von den spezifischen Authentifizierungsdaten ($DA_j$), und bei positiver oder negativer Antwort der Überprüfung,

- Annahme bzw. Verweigerung des Zugangs.

2. Protokoll nach Anspruch 1, **dadurch gekennzeichnet, dass** der Schritt der Überprüfung des Signaturwertes durch das elektronische Schloss nacheinander umfasst:

- eine erste Überprüfung (1003a) der Authentizität der spezifischen Authentifizierungsdaten durch das elektronische Schloss ($B_i$) an Hand eines Vergleichskriteriums mit Referenzdaten und bei positiver Antwort auf das Vergleichskriterium,

- eine zweite Überprüfung (1003b) des Signaturwertes ($C_i$) durch das elektronische Schloss ($B_i$) in Abhängigkeit von den spezifischen Authentifizierungsdaten ($DA_j$).

3. Protokoll nach den Ansprüchen 1 und 2, **dadurch gekennzeichnet, dass** der erste Schritt der Überprüfung der Authentizität der spezifischen Authentifizierungsdaten ($DA_j$) durch das elektronische Schloss darin besteht, den Gültigkeitsbereich ($PH_j$), der mit dem öffentlichen Schlüssel ($K'_p$) verbunden ist, zu kontrollieren.

4. Protokoll nach Anspruch 2, **dadurch gekennzeichnet, dass** der Gültigkeitsbereich ($PH_j$) mehrere getrennte Zeitintervalle umfasst.

5. Protokoll nach Anspruch 2 oder 3, **dadurch gekennzeichnet, dass** jeder Gültigkeitsbereich ($PH_j$) in mindestens einem Zeitintervall besteht, das zwei Grenzen umfasst, die jeweils als ein Datum mit Tag, Monat, Jahr und eine Uhrzeit in Stunden, Minuten und Sekunden ausgedrückt wird.

6. Protokoll nach einem der vorhergehenden Ansprüche, **dadurch gekennzeichnet, dass** die zufällige variable Erregerbotschaft ($a_{ij}$) mit Authentifizierung von einem Identifikationswert ($CB_i$) des elektronischen Schlosses ($B_i$) und von einem ständig steigenden variablen Wert ($CO$) abhängt.

7. Protokoll nach einem der Ansprüche 1 bis 6, **dadurch gekennzeichnet, dass** nach Empfang der zufälligen variablen Erregerbotschaft ($a_{ij}$) mit Authentifizierung durch den elektronischen Schlüssel ($EK_{kj}$) aber vor dem Schritt der Berechnung und Übertragung eines Signaturwertes ($C_i$) durch den elektronischen Schlüssel, wobei der elektronische Schlüssel ($EK_{kj}$) mit einer inneren Uhr ausgestattet ist, das Protokoll ferner in einem Schritt (1007) der zusätzlichen Überprüfung der Autorisierung der Signaturberechnung der zufälligen variablen Erregerbotschaft mit Authentifizierung besteht, wobei der Schritt der zusätzlichen Überprüfung (1007) darin besteht:

- mit Hilfe des anderen öffentlichen Schlüssels ($K_p$), der mit dem anderen privaten Signaturschlüssel ($K_s$) verbunden ist, das Zertifikat des öffentlichen Schlüssels ($K'_p$) und den mit diesem öffentlichen Schlüssel ($K'p$) verbundenen Gültigkeitsbereich ($PH_j$) gegenüber der inneren Uhr zu überprüfen, wobei es diese Überprüfung ermöglicht, tatsächlich die Gültigkeit des öffentlichen Schlüssels ($K'_p$) zu überprüfen;

- die Verbindung des privaten Signaturschlüssels ($K'_s$) mit dem öffentlichen Schlüssel ($K'_p$), dessen Gültigkeit im vorhergehenden Schritt überprüft wurde, und an Hand eines positiven und negativen Antwortkriteriums (1007c) auf die beiden vorhergehenden Schritte der Überprüfung zu überprüfen,

- das Zugangskontrollprotokoll weiterzuführen (1007e) bzw. zu unterbrechen (1007d).

8. Protokoll nach einem der Ansprüche 2 bis 7, **dadurch gekennzeichnet, dass** während des Schrittes (1003) der Überprüfung der Authentizität des Signaturwertes ($C_i$) durch das elektronische Schloss ($B_i$) nach dem ersten Schritt (1003a) der Überprüfung der Authentizität der spezifischen Authentifizierungsdaten ($DA_j$) durch dieses elektronische Schloss ($B_i$), der darin besteht, den Gültigkeitsbereich ($PH_j$), der mit diesem öffentlichen Schlüssel ($K'_p$) verbunden ist, zu kontrollieren, aber vor dem Schritt (1003b) der zweiten Überprüfung der Authentizität des Signaturwertes durch dieses elektronische Schloss ($B_i$), das Protokoll ferner eine Vielzahl von Tests ($1003a_1$) umfasst, die jeden Angriff außerhalb des Gültigkeitsbereichs ($PH_j$) begrenzen.

**9.** Protokoll nach einem der Ansprüche 1 bis 8, **dadurch gekennzeichnet, dass** vor dem Schritt der Berechnung und Übertragung vom elektronischen Schlüssel ($EK_{kj}$) an das elektronische Schloss ($B_i$) eines Signaturwertes ($C_i$) der zufälligen variablen Erregerbotschaft ($a_{ij}$) mit Authentifizierung ($DA_j$), wobei der elektronische Schlüssel ($EK_{kj}$) mit einer Echtzeituhr ausgestattet ist, das Protokoll umfasst:

- einen Schritt ($1007c_1$) der Zugehörigkeit einer Zeitvariablen, die von der Echtzeituhr geliefert wird, gegenüber dem Gültigkeitsbereich ($PH_j$) und bei negativer Antwort auf den Schritt der Kontrolle der Zugehörigkeit,

- einen Schritt ($1007c_3$) der Ungültigkeitserklärung des elektronischen Schlüssels, der die Zugangskontrolle unterbricht und die Verweigerung des Zugangs durch das elektronische Schloss nach sich zieht.

**10.** Elektronischer Schlüssel, umfassend Mittel ($C_{ak}$) zur kryptografischen Berechnung und Mittel ($T_k$) zur Übertragung von Botschaften oder Daten für den Einsatz des Zugangskontrollprotokolls zu einem elektronischen Schloss ($B_i$) durch diesen elektronischen Schlüssel ($EK_{kj}$) nach einem der Ansprüche 1 bis 9, **dadurch gekennzeichnet, dass** außer einer zentralen Recheneinheit (CPU) die Mittel ($C_{ak}$) zur kryptografischen Berechnung mindestens umfassen:

- eine Speicherzone (1) mit geschütztem Zugang, die die Speicherung von mindestens einem privaten Signaturschlüssel ($K'_s$) und von spezifischen Authentifizierungsdaten ($DA_j$) ermöglicht, wobei diese spezifischen Authentifizierungsdaten ($DA_j$) in mindestens einem Zertifikat eines öffentlichen Schlüssels ($K'_p$) bestehen können, der von einem digitalen Signaturwert mindestens eines Gültigkeitsbereichs ($PH_j$), bezogen auf ein Zugangsrecht, und dem öffentlichen Schlüssel ($K'_p$) gebildet ist;

- einen im Lesemodus zugänglichen Speicher (4), der das Abrufen von Programmen zur Berechnung des digitalen Signaturwertes einer zufälligen variablen Botschaft ($a_{ij}$), die von diesem elektronischen Schloss ($B_i$) geliefert wird, mit Hilfe des privaten Signaturwertes ($K'_s$) ermöglicht.

**11.** Elektronisches Schloss, umfassend Mittel ($C_{ai}$) zur kryptografischen Berechnung und Mittel ($T_i$) zur Übertragung von Botschaften oder Daten für den Einsatz eines Zugangskontrollprotokolls zu diesem elektronischen Schloss durch einen elektronischen Schlüssel ($EK_{kj}$), indem an den elektronischen Schlüssel eine zufällige variable Erregerbotschaft ($a_{ij}$) mit Authentifizierung dieses elektronischen Schlüssels ($EK_{kj}$) übertragen wird, **dadurch gekennzeichnet, dass** außer einer zentralen Recheneinheit (CPU) die Berechnungsmittel ($C_{ai}$) mindestens umfassen:

- eine Speicherzone (5) mit geschütztem Zugang, die die Speicherung von mindestens einem ersten öffentlichen Schlüssel (Kp) zur Überprüfung der Signatur ermöglicht;

- einen im Lesemodus zugänglichen Speicher (6), der das Abrufen von Programmen zur Überprüfung der Authentizität eines digitalen Signaturwertes ($C_i$) der zufälligen variablen Botschaft, die von dem elektronischen Schlüssel empfangen wird, ermöglicht, in Abhängigkeit von spezifischen Authentifizierungsdaten ($DA_j$), die von dem elektronischen Schlüssel übertragen werden, mindestens bestehend in einem Zertifikat eines zweiten öffentlichen Schlüssels ($K'_p$), wobei das Zertifikat des öffentlichen Schlüssels in einem digitalen Signaturwert mindestens eines Gültigkeitsbereichs ($PH_j$) bezogen auf ein Zugangsrecht besteht, und des zweiten öffentlichen Schlüssels ($K'_p$), der mit Hilfe eines ersten privaten Signaturschlüssels ($K_s$) berechnet wird, mit dem der erste öffentliche Schlüssel ($K_p$) verbunden ist, wobei der zweite öffentliche Schlüssel ($K'_p$) mit einem zweiten privaten Signaturschlüssel ($K'_s$) am Ursprung der digitalen Signatur ($C_i$) der zufälligen variablen Botschaft verbunden ist.

**Claims**

**1.** An access control protocol between an electronic key ($EK_{kj}$) and an electronic lock ($B_i$) performing access control, in which protocol, following presentation of said electronic key ($EK_{kj}$) to said electronic lock ($B_i$), a random variable message ($a_{ij}$) prompting authentication of the electronic key ($EK_{kj}$) is transmitted from said electronic lock to said electronic key, **characterised in that**, on receiving said random variable message ($a_{ij}$) prompting authentication, the protocol consists of at least, in succession:

- calculating and transmitting from said electronic key ($EK_{kj}$) to said electronic lock ($B_i$) a digital signature value of said random variable message prompting authentication based on a private signature key ($K'_s$) and specific authentication data), said specific authentication data transmitted by said electronic key ($EK_{kj}$) to said electronic lock ($B_i$) consisting of at least one public key ($K'_p$) certificate associated with said private signature key ($K'_s$), said public key certificate consisting of a digital signature value of at least one validity time period ($PH_j$) relating to a right of access and of said public key ($K'_p$), said signature value being calculated from another private signature key ($K_s$) associated with another public key ($K_p$), and, after reception by said electronic lock of said signature value ($C_i$) and said specific authentication data ($Da_j$):

- verification (1003) $v_{KPK'P}((Ci,Daj))$ by said electronic lock ($B_i$) of the authenticity of said signature value ($C_i$) as a function of said specific authentication data ($Da_j$) and, in response to a positive or negative result of said verification:

- acceptance or respectively refusal of said access.

2. A protocol according to claim 1, **characterised in that** said step of verification of said signature value by said electronic lock includes, in succession:

   - a first verification (1003a) by said electronic lock ($B_i$) of the authenticity of said specific authentication data based on comparison with reference data and, in the event of a positive result of said comparison:

   - a second verification (1003b) by said electronic lock ($B_i$) of said signature value ($C_i$) as a function of said specific authentication data ($Da_j$).

3. A protocol according to claims 1 and 2, **characterised in that** said step of verification by said electronic lock of the authenticity of said specific authentication data ($Da_j$) consists of checking said validity time period ($PH_j$) associated with said public key ($K'_p$).

4. A protocol according to claim 2, **characterised in that** validity time period ($PH_j$) includes a plurality of non-contiguous time intervals.

5. A protocol according to claim 2 or claim 3, **characterised in that** each validity time period ($PH_j$) consists of at least one time interval having two limits each expressed as a date in terms of day, month, year and a time in terms of hour, minute, second.

6. A protocol according to any preceding claim, **characterised in that** said random variable message ($a_{ij}$) prompting authentication is a function of an identification value ($CB_i$) of said electronic lock ($B_i$) and a continuously increasing variable value (CO).

7. A protocol according to any of claims 1 to 6, **characterised in that**, after reception of said random variable message ($a_{ij}$) prompting authentication by said electronic key ($EK_{kj}$) but before the step of calculation and transmission of a signature value ($C_i$) by said electronic key, said electronic key ($EK_{kj}$) having an internal clock, said protocol further consists of an auxiliary verification step (1007) for authorising calculation of the signature of said random variable message prompting authentication, said auxiliary verification step (1007) consisting of:

   - using the other public key ($K_p$) associated with said other private signature key ($K_s$) to verify (1007a) said public key ($K'_p$) certificate and said validity time period ($PH_j$) associated with said public key against said internal clock, to verify the validity of said public key),
   - verifying (1007b) the association of said private signature key ($K'_s$) and said public key ($K'_p$), whose validity has been verified in the preceding step, and, on the basis of positive and negative result criteria (1007c) for the preceding two verification steps:

   - continuing (1007e) or respectively interrupting (1007d) said access control protocol.

8. A protocol according to any of claims 2 to 7, **characterised in that** it further comprises a plurality of tests limiting all attack outside said validity time period, which tests are performed during said step of verification by said electronic lock ($B_i$) of the authenticity of said signature value ($C_i$), after said step (1003a) of verification by said electronic lock ($B_i$) of the authenticity of the specific authentication data ($Da_j$) consisting of checking said validity time period associated with said public key ($K'_p$) but before said step (1003b) of verification by said electronic lock ($B_i$) of the authenticity of said signature value, said protocol further comprising a plurality of tests ($1003a_1$) limiting any attack outside said validity time period ($PH_j$).

9. A protocol according to any of claims 1 to 8, **characterised in that** it comprises, before said step of calculation and transmission from said electronic key ($EK_{kj}$) to said electronic lock ($B_i$) of a signature value ($C_i$) of said random variable message ($a_{ij}$) prompting authentication and specific authentication data ($DA_j$), said electronic key including a real-time clock:

   - a step ($1007c_1$) of testing if a time variable delivered by said real-time clock is inside said validity time period ($PH_j$) and, in the event of a negative result of said test:

   - a step ($1007c_3$) of invalidation of said electronic key interrupting said access control and leading to refusal of said access by said electronic lock.

10. An electronic key comprising cryptographic calculation means ($C_{ak}$) and message or data transmission means ($T_k$) for implementing a protocol according to any of claims 1 to 9 for controlling access to an electronic lock ($B_i$) by said electronic key ($EK_{kj}$), **characterised in that**, in addition to a central processor unit (CPU), said cryptographic calculation means ($C_{ak}$) include at least:

   - a protected access memory area (1) for storing at least one private signature key ($K'_s$) and specific authentication data ($Da_j$), said specific authentication data ($Da_j$) consisting of at least one public key ($K'_p$) certificate consisting of a digital signature value of at least one validity time period ($PH_j$) relating to a right of access and said public key ($K'_p$), and
   - a read-only memory (4) used to call programs for calculating the digital signature value of a random variable message ($a_{ij}$) delivered by said electronic lock ($B_i$) using said private signature key ($K'_s$).

11. An electronic lock comprising cryptographic calculation means ($C_{ai}$) and message or data transmission means ($T_i$) for implementing a protocol according to any of claims 1 to 9 for controlling access to said electronic lock by an electronic key ($EK_{kj}$), **characterised in that**, in addition to a central processor unit (CPU), said calculation means ($C_{ai}$) include at least:

   - a protected access memory area (5) for storing at least one public signature verification key ($K_p$), and
   - a read-only memory (6) used to call signature verification programs for checking the authenticity of a digital signature value ($C_i$) of said random variable message received from said electronic key, as a function of specific authentication data ($DA_j$) transmitted by said electronic key, consisting at least on a certificate of a second public key ($K'_p$), said public key certificate consisting on a digital signature value of at least a validity time period ($PH_j$) related to an access right, and of said second public key ($K'_p$), calculated by the means of a first signature private key ($K_s$) to which is associated the first public key ($K_p$), said second public key ($K'_p$) being associated to a second signature private key ($K'_s$), on which is based said digital signature ($C_i$) of said random variable message.

# FIG.1a.

ENTITÉ DE VALIDATION
$DA_j =$
$S_{KS}(K'_P, PH_j, AUX)$
$K_P\ K'_S$

$V_j$

$EK_{kj}$ $T_k$

$K'_S$
$DA_j$ $Ca_k$
$K_P$

$V_j \begin{cases} DA_j \\ K'_S \\ K_P \end{cases}$

$a_{ij}$

$A_{ki}$

$C_i, DA_j$
$(K'_P)$
$(VCK)$

$C_i = S_{K'_S}(a_{ij})$

ENTITÉ DE SIGNATURE

$K_S$

AUTORITÉ DE CERTIFICATION

$B_1$
$K_P\ (K'_P)$
1

$B_i$ $V_i$
$K_P\ (K'_P)$ $Ca_i$
$T_i$
i

$V_{KP\ K'_P}(C_i, DA_j)$

BN
$K_P\ (K'_P)$
N

# FIG.1b.

| TRANSMISSION $A_{ki}$ | 1000 $EK_{kj}$ |

| TRANSMISSION $a_{ij}$ | 1001 $B_i$ |

$V_j$

| CALCUL: $C_i = S_{K'_S}(a_{ij})$ TRANSMISSION $C_i, DA_j, (K'_P)(VCK)$ | 1002 $EK_{kj}$ |

$V_i$

| $V_{KP\ K'_P}(C_i, DA_j) = V$ | 1003 $B_i$ |

1004
$V = VRAI$
+ OUI      − NON

1006 AUTORISATION ACCÈS

1005 REFUS ACCÈS

FIG.1c.

$$V_{KP}(S_{KS}(K'_P, PH_j, AUX))$$
$$VK'_P \quad PH_j$$
$$VK'_P = K'_P$$
— 1003a

$$V_{K'_P}(C_i) =$$
$$V_{K'_P}(S_{K'_S}(a_{ij}))$$
$$Va_{ij} \quad Va_{ij} = a_{ij}$$
— 1003b

} 1003

FIG.1d.

$$r_{ij} = CB_i \otimes CO$$

| $CB_i$ | | $CO$ | |
|---|---|---|---|
| $CB_i$ | | $YMDHms$ | |

| $CB_i$ | $r_{ij}$ | $CO$ |
|---|---|---|

$a_{ij}$

FIG.1f.

$$V_{KP}(S_{KS}(K'_P, PH_j, AUX))$$
$$VK'_P \quad PH_j$$
— 1003a

$(\overline{VCK})$ →

| $CO \in PH_j$ | $PH_j = [\overline{VH1, VH2}]$ |
| $(VCK)$ | $VCK \in PH_j$ |
| | $VCK > VC\,ref$ |

— 1003a1

— 10003b

FIG.1e.

# FIG.1g.

```
                    ┌ ─ ─ ─ ─ ─ ─ ─ ─ ─ ─ ┐
                    │                     │————1001
                    └ ─ ─ ─ ─ ─ ─ ─ ─ ─ ─ ┘
                               │
                               ▼
```

$V_{KP}(S_{KS}(K'_P, PH_j, AUX))$
$VK'_P = K'_P$
$PH_j \equiv VCK$ ————1007a

$S_{K'S}(X)$
$V_{K'P}(S_{K'S}(X)) = VX$
$VX = X$ ————1007b

1007

1007c1  $PH_j \equiv VCK$ — ⟶ INVALIDATION $EK_{kj}$ ————1007c3

+

1007c2  $VK'_P = K'_P$  $VX = VX$ ⟶ INTERRUPTION DU PROTOCOLE ————1007d

POURSUITE DU PROTOCOLE ————1007e

```
                    ┌ ─ ─ ─ ─ ─ ─ ─ ─ ─ ─ ┐
                    │                     │————1002
                    └ ─ ─ ─ ─ ─ ─ ─ ─ ─ ─ ┘
```

VCK

# FIG.2a.

ENTITÉ DE VALIDATION
$DA_j = S_{KS}(K'_P, PH_j, AUX)$

$V_j \begin{cases} DA_j \\ K'_S \end{cases}$

ENTITÉ DE SIGNATURE

$K_S$

AUTORITÉ DE CERTIFICATION

$EK_{kj}$    $T_k$

$DA_j$ $K_P$ $K'_S$   $Ca_k$

$C_i$

$V_{KP}(S_{KS}(K'_P, PH_j, AUX))$

$B_1$
$K_P$
1

$a_{ij}$

$A_{ki}$

$C_i, K'_P, DA_j$

$B_i$   $V_i$

$K_P$   $Ca_i$

$T_i$

i

$V_{KP K'_P}(C_i, DA_j)$

# FIG.2b.

| | |
|---|---|
| TRANSMISSION $A_{ki}$ | 1000 $EK_{kj}$ |
| TRANSMISSION $a_{ij}$ | 1001 $B_i$ |
| $V_{KP}(S_{KS}(K'_P, PH_j, AUX))$ $K'_P$ | 1002a $EK_{kj}$ |
| $C_i = S_{K'_S}(a_{ij})$ | 1002b $EK_{kj}$ |
| TRANSMISSION $C_i, DA_j, K'_P$ | 1002c $EK_{kj}$ |
| | 1003 |

1002

# FIG.3a.

# FIG.3b.